# EUROPÄISCHE PATENTSCHRIFT

(11) **EP 2 643 422 B1**
(45) Veröffentlichungstag und Bekanntmachung des Hinweises auf die Patenterteilung: **17.06.2020**
(21) Anmeldenummer: 11787850.4
(22) Anmeldetag: 22.11.2011
(51) Int. Cl.: C09K 8/584, C09K 8/588, C08F 220/00

(54) **WÄSSRIGE FORMULIERUNGEN VON HYDROPHOB ASSOZIIERENDEN COPOLYMERE UND TENSIDEN SOWIE DEREN VERWENDUNG ZUR ERDÖLFÖRDERUNG**
AQUEOUS FORMULATIONS OF HYDROPHOBICALLY ASSOCIATING COPOLYMERS AND SURFACTANTS AND ALSO THEIR USE FOR PETROLEUM RECOVERY
FORMULATIONS AQUEUSES DE COPOLYMÈRES À ASSOCIATION HYDROPHOBE ET D'AGENTS TENSIO-ACTIFS AINSI QUE LEUR UTILISATION POUR L'EXTRACTION PÉTROLIÈRE

(30) Priorität: 24.11.2010 EP 10192316
(43) Veröffentlichungstag der Anmeldung: 02.10.2013
(73) Patentinhaber: BASF SE, 67056 Ludwigshafen am Rhein (DE)
(72) Erfinder: REICHENBACH-KLINKE, Roland, 83278 Traunstein (DE); LANGLOTZ, Björn, 83308 Trostberg (DE)
(74) Vertreter: BASF IP Association
(86) Internationale Anmeldenummer: PCT/EP2011/070612
(87) Internationale Veröffentlichungsnummer: WO 2012/069438

(56) Entgegenhaltungen:
- EP-A1- 2 287 216
- WO-A1-2009/124922
- WO-A2-2010/133527
- FR-A1- 2 920 818
- US-A1- 2001 020 531
- K. C. TAYLOR ET AL: "Hydrophobically Associating Polymers for Oil Field Applications", CANADIAN INTERNATIONAL PETROLEUM CONFERENCE 2007, CALGARY, ALBERTA, 1. Januar 2007 (2007-01-01), XP55018722, DOI: 10.2118/2007-016

## Beschreibung

Die vorliegende Erfindung betrifft ein Verfahren zur Erdölförderung bei dem man eine wässrige Formulierung umfassend mindestens ein wasserlösliches, hydrophob assoziierendes Copolymer (A) sowie mindestens ein nichtionisches und/oder anionisches Tensid (B) durch mindestens eine Injektionsbohrung in eine Erdöllagerstätte einpresst und der Lagerstätte durch mindestens eine Produktionsbohrung Rohöl entnimmt, wobei das wasserlösliche, hydrophob assoziierende Copolymer mindestens Acrylamid bzw. Derivate davon, ein anionische Gruppen aufweisendes Monomer sowie ein Monomer, welches das Assoziieren des Copolymers bewirken kann, umfasst. Die Erfindung betrifft weiterhin eine zur Ausführung des Verfahrens geeignete wässrige Formulierung.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 µm aufweisen. Neben Erdöl, inklusive Anteilen von Erdgas, enthält eine Lagerstätte außerdem mehr oder weniger stark salzhaltiges Wasser.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche. Der Eigendruck kann beispielweise durch in der Lagerstätte vorhandene Gase wie Methan, Ethan oder Propan hervorgerufen werden. Der Eigendruck der Lagerstätte lässt bei Entnahme von Erdöl aber in der Regel relativ schnell nach, so dass mittels der primären Förderung je nach Lagerstättentyp meist nur ca. 5 bis 10% der in der Lagerstätte vorhandenen Erdölmenge gefördert werden können. Danach reicht der Eigendruck nicht mehr zur Förderung von Erdöl aus.

Nach der primären Förderung kommt daher üblicherweise die sekundäre Förderung zum Einsatz. Bei der sekundären Förderung werden zusätzlich zu den Bohrlöchern, welche der Förderung des Erdöls dienen, den sogenannten Produktionsbohrungen, weitere Bohrlöcher in die erdölführende Formation gebohrt. Durch diese sogenannten Injektionsbohrungen wird Wasser in die Lagerstätte eingepresst (das sogenannte "Wasserfluten"), um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird. Sobald das dünnflüssige Wasser durch Hohlräume durchbricht, strömt es ab diesem Zeitpunkt auf dem Weg des geringsten Widerstandes, also durch den gebildeten Kanal und schiebt nicht mehr das Öl vor sich her. Mittels primärer und sekundärer Förderung sind daher im Regelfalle nur ca. 30 bis 35 % der in der Lagerstätte vorhandenen Erdölmenge zu fördern.

Nach den Maßnahmen der sekundären Erdölförderung werden daher auch Maßnahmen der tertiären Erdölförderung (auch bekannt als "Enhanced Oil Recovery (EOR)") zur weiteren Steigerung der Ölausbeute eingesetzt. Hierzu gehören Verfahren, bei denen man bestimmte Chemikalien, wie Tenside und/oder Polymere als Hilfsmittel zur Ölförderung einsetzt. Eine Übersicht zur tertiären Ölförderung unter Einsatz von Chemikalien findet sich beispielsweise im Artikel von D. G. Kessel, Journal of Petroleum Science and Engineering, 2 (1989) 81 - 101.

Zu den Techniken der tertiären Erdölförderung gehört das so genannte "Polymerfluten". Beim Polymerfluten presst man durch die Injektionsbohrungen eine wässrige Lösung eines verdickend wirkenden Polymers in die Erdöllagerstätte ein, wobei die Viskosität der wässrigen Polymerlösung an die Viskosität des Erdöls angepasst ist. Durch das Einpressen der Polymerlösung wird das Erdöl wie beim Wasserfluten durch die genannten Hohlräume in der Formation von der Injektionsbohrung ausgehend in Richtung der Produktionsbohrung gedrückt, und das Erdöl wird über die Produktionsbohrung gefördert. Dadurch dass die Polymerformulierung aber etwa die gleiche Viskosität aufweist wie das Erdöl, wird die Gefahr verringert, dass die Polymerformulierung ohne Effekt zur Produktionsbohrung durchbricht, und somit erfolgt die Mobilisierung des Erdöls viel gleichmäßiger als bei der Verwendung von dünnflüssigem Wasser. Somit kann zusätzliches Erdöl in der Formation mobilisiert werden.

Zum Polymerfluten sind eine Vielzahl verschiedener, verdickend wirkender Polymere vorgeschlagen worden, insbesondere hochmolekulares Polyacrylamid, Copolymere aus Acrylamid und weiteren Comonomeren wie beispielsweise Vinylsulfonsäure oder Acrylsäure. Bei Polyacrylamid kann es sich insbesondere um teilhydrolysiertes Polyacrylamid handeln, bei dem ein Teil der Acrylamideinheiten zu Acrylsäure hydrolysiert ist. Weiterhin können auch natürlich vorkommende Polymere eingesetzt werden, wie beispielsweise Xanthan oder Polyglycosylglucan, wie beispielsweise von US 6, 392, 596 B1 oder CA 832 277 beschrieben.

Zu den Techniken der tertiären Erdölförderung gehört weiterhin das so genannte "Tensidfluten". Beim Tensidfluten injiziert man durch die Injektionsbohrung geeignete Tenside in die Erdöllagerstätte ein. Die Tenside setzen die Grenzflächenspannung σ zwischen dem Erdöl und der wässrigen Phase herab. In der Erdölformation verbliebenes Erdöl bildet mit den Tensiden eine Mikroemulsion, so dass es nun durch injiziertes Flutwassser auch durch feine Kapillaröffnungen aus der Formation gedrückt werden kann.

Einzelheiten zu Techniken der tertiären Erdölförderung wie beispielsweise "Tensidfluten" und "Polymerfluten" sind beispielsweise in "Petroleum, Enhanced Oil Recovery, Kirk-Othmer, Encyclopedia of Chemical Technology, Online-Ausgabe, John Wiley & Sons, 2010" offenbart.

Wie bereits oben geschildert, kann beim Wasserfluten der Fall eintreten, dass die Erdöllagerstätte ungleichmäßig entölt wird. In durchlässigeren Bereichen der Erdölformation wird das Reservoir stärker entölt und es kann zu einem Durchbruch des Wassers zu Produktionsbohrung kommen.

Wendet man auf derartige Erdöllagerstätten die Technik des Tensidflutens an, besteht die Gefahr, dass auch die Tensidlösung über durchlässigere und daher niedrige Fließwiderstände aufweisende Bereiche von der Injektions- zur Produktionsbohrung strömt und nicht im gewünschten Maße Erdöl durch das Tensid mobilisiert wird. Es ist daher bekannt, Tensidlösungen mit verdickenden Polymeren zu verdicken, um zu verhindern, dass die Tensidlösung bevorzugt durch die durchlässigeren Bereiche der Erdöllagerstätte fließt.

Neben den oben genannten, verdickend wirkenden Polymeren können auch hydrophob assoziierende Copolymere zum Polymerfluten eingesetzt werden. Unter "hydrophob assoziierenden Copolymeren" versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, durch das das Medium verdickt wird. Einzelheiten zur Verwendung hydrophob assoziierender Copolymere zur tertiären Erdölförderung sind beispielsweise im Übersichtsartikel von Taylor, K.C. und Nasr-El-Din, H.A. in J. Petr. Sci. Eng. 1998, 19, 265-280 beschrieben.

EP 705 854 A1, DE 100 37 629 A1 und DE 10 2004 032 304 A1 offenbaren wasserlösliche, hydrophob assoziierende Copolymere und deren Verwendung, beispielsweise im Bereich der Bauchemie. Die beschriebenen Copolymere umfassen saure Monomere wie beispielsweise Acrylsäure, Vinylsulfonsäure, Acrylamidomethylpropansulfonsäure, basische Monomere wie Acrylamid, Dimethylacrylamid oder kationische Gruppen umfassenden Monomeren, wie beispielsweise Ammoniumgruppen aufweisende Monomere sowie weiterhin Monomere, welche das hydrophobes Assoziieren der einzelnen Polymerketten bewirken können.

Bei der Kombination hydrophob assoziierender Polymere mit Tensiden kann die Viskosität der erhaltenen Lösung aus Polymer und Tensid je nach der Art der Wechselwirkungen zwischen den Tensiden und den Polymeren sowohl größer als auch kleiner sein, als die Viskosität der Polymerlösung alleine (siehe z.B. W. Zhou, Y. Guo, M. Dong, H. Xiao, Journal of Canadian Petroleum Technology, 43(2), 2004, Seiten 13 bis 16). Für den Einsatz zur tertiären Erdölförderung ist eine Verringerung der Viskosität naturgemäß höchst unerwünscht, weil zum Erreichen der gewünschten Viskosität mehr Polymer eingesetzt werden muss, und dies die Wirtschaftlichkeit des Verfahrens stark beeinträchtigt.

US 4,814,096 offenbart eine Mischung aus hydrophob assoziierenden Polymeren und Tensiden für die tertiäre Erdölförderung. Das hydrophob assoziierende Polymer umfasst hydrophile Monomere wie beispielsweise Acrylamid. Bei den hydrophoben Monomeren handelt es sich um C₈- bis C₂₀-Alkylester ethylenisch ungesättiger Carbonsäuren, N-Alkylderivate von ethylenisch ungesättigten Carbonsäureramiden mit C₈- bis C₂₀-Alkyresten, Vinylalkylate von Alkylresten mit mindestens 8 C-Atomen sowie Alkylstryrole mit Alkylresten mit mindestens 4 C-Atomen. Bei den Tensiden handelt es sich um nichtionische Tenside und das Verhältnis von Polymer zu Tensid beträgt bevorzugt 20:1 bis 0,5:1.

GB 2 199 354 A1 offenbart eine Mischung aus hydrophob assoziierenden Polymeren und Tensiden für die sekundäre Erdölförderung. Das Polymer umfasst Acrylamid, Sulfonsäuregruppen aufweisende Monomere sowie N-Alkyl- oder N,N'-Dialkylacrylamide, woeb es sich bei mindestens einem der Alkylreste um einen C₆- bis C₂₂-Alkylrest handelt. Das Polymer wird in einer Menge von 0,0001 bis 0,5 Gew. % eingesetzt und das Tensid in einer Menge von 0,1 Gew. % bis 5 Gew. %.

US 2010/0197529 A1 (äquivalent zu FR 2 920818 A1) offenbart eine weitere Mischung aus hydrophob assoziierenden Polymeren und Tensiden für die sekundäre Erdölförderung. Das Polymer zeichnet sich dadurch aus, dass es ein hydrophobes, kationisches Monomere umfasst, bevorzugt ethylenisch ungesättige Trialkylammoniumderivate, wobei es sich bei mindestens einem der Alkylreste um einen C₈- bis C₃₀-Alkyrest handelt. Das Gewichtsverhältnis von Polymer zu Tensid beträgt 1:1 bis 1:10, bevorzugt 1:2 bis 1:10. Die Menge an Tensid ist also zumindest gleich groß wie die Menge an Polymer, bevorzugt deutlich größer. Der technische Effekt der Mischung ist in Abschnitt [0013] von US 2010/0197529 A1 beschrieben: Das Öl wird bereits mit einer kleinen Menge an Tensid emulgiert, indem man es mit einer geringen Menge eines hydrophob assoziierenden Copolymers mit kationischen hydrophoben Monomeren kombiniert. Es handelt sich also um ein verbessertes Verfahren zum Tensidfluten.

Unsere ältere Anmeldung WO2010/133527 A2 offenbart hydrophob assoziierende Copolymere, welche mindestens hydrophile, monoethylenisch ungesättigte Monomere wie beispielsweise Acrylamid sowie monoethylenisch ungesättigte hydrophob assoziierende Monomere umfassen. Die hydrophob assoziierenden Monomere haben eine Blockstruktur und weisen -in dieser Reihenfolge- eine ethylenisch ungesättigte Gruppe, optional eine verknüpfende Gruppe, einen ersten Polyoxyalkylenblock, welcher zu mindestens 50 mol % Ethylenoxygruppen umfasst sowie einen zweiten Polyoxyalkylenblock auf, welcher aus Alkylenoxygruppen mit mindestens 4 Kohlenstoffatomen besteht. Die Anmeldung offenbart die Verwendung derartiger Copolymere als Verdicker, beispielsweise zum Polymerfluten, für bauchemische Anwendungen oder für Waschmittelformulierungen.

Unsere ältere Anmeldung WO2011/015520 A1 offenbart ein Verfahren zum Herstellen hydrophob assoziierender Copolymere durch Polymerisation wasserlöslicher, monoethylenisch ungesättigter oberflächenaktiver Monomere sowie monoethylenisch ungesättigten hydrophilen Monomeren in Gegenwart von Tensiden und die Verwendung derartiger Copolymere zum Polymerfluten.

Beide Anmeldungen offenbaren weiterhin, dass man die offenbarten hydrophob assoziierenden Copolymere mit Tensiden mischen kann, ohne Einzelheiten hinsichtlich der Tenside und der Mischungen zu offenbaren.

Aufgabe der Erfindung war es, neue Mischungen aus hydrophob assoziierenden Copolymeren und geeigneten Tensiden für die tertiäre Erdölförderung zu Verfügung zu stellen.

Dementsprechend wurde ein Verfahren zur Erdölförderung gefunden, bei dem man eine wässrige Formulierung umfassend mindestens ein wasserlösliches, hydrophob assoziierendes Copolymer (A) sowie mindestens ein Tensid (B) durch mindestens eine Injektionsbohrung in eine Erdöllagerstätte einpresst und der Lagerstätte durch mindestens eine Produktionsbohrung Rohöl entnimmt, und wobei
(A) das wasserlösliche, hydrophob assoziierende Copolymer
   (Aa) 0,1 bis 15 Gew.-% mindestens eines monoethylenisch ungesättigten Monomers (Aa) eines ausgewählt aus der Gruppe von

      H₂C=C(R¹)-R²-O-(-CH₂-CH(R³)-O-)ₖ-(-CH₂-CH(R⁴)-O-)ₗ-R⁵ (I),

      H₂C=C(R¹)-O-(-CH₂-CH(R³)-O-)ₖ-R⁶ (II),

      H₂C=C(R¹)-(C=O)-O-(⁻CH₂-CH(R³)-O-)ₖ-R⁶ (III),

      umfasst, wobei die Einheiten -(-CH₂-CH(R³)-O-)ₖ und -(-CH₂-CH(R⁴)-O-)ₗ in Blockstruktur in der in Formel (I) dargestellten Reihenfolge angeordnet sind und die Reste und Indices die folgende Bedeutung haben:
      - k:: eine Zahl von 10 bis 150,
      - I:: eine Zahl von 5 bis 25,
      - R¹:: H oder Methyl,
      - R²:: eine Einfachbindung oder eine zweiwertige, verknüpfende Gruppe, ausgewählt aus der Gruppe von -(CₙH₂ₙ)- [R^{2a}], -O-(C_{n'}H_{2n'})- [R^{2b}] und-C(O)-O-(C_{n"}H_{2n"})- [R^{2c}], wobei n, n' und n" jeweils für eine natürliche Zahl von 1 bis 6 stehen,
      - R³:: unabhängig voneinander H, Methyl oder Ethyl, mit der Maßgabe, dass es sich bei mindestens 50 mol % der Reste R² um H handelt,
      - R⁴:: unabhängig voneinander ein Kohlenwasserstoffrest mit mindestens 2 Kohlenstoffatomen oder eine Ethergruppe der allgemeinen Formel-CH₂-O-R^{4'}, wobei R⁴ für einen Kohlenwasserstoffrest mit mindestens 2 Kohlenstoffatomen steht,
      - R⁵:: H oder ein Kohlenwasserstoffrest mit 1 bis 30 C-Atomen,
      - R⁶:: ein aliphatischer und/oder aromatischer, geradkettiger oder verzweigter Kohlenwasserstoffrest mit 8 bis 40 Kohlenstoffatomen,
      sowie weiterhin
   (Ab) 85 bis 99,9 Gew. % mindestens zweier, davon verschiedener, monoethylenisch ungesättigter, hydrophiler Monomere (Ab) umfasst, wobei es sich bei den Monomeren (Ab) um
      (Ab1) mindestens ein neutrales, monethylenisch ungesättigtes, hydrophiles Monomer (b1), ausgewählt aus der Gruppe von (Meth)acrylamid, N-Methyl(meth)acrylamid, N,N'-Dimethyl(meth)acrylamid oder N-Methylol(meth)acrylamid, sowie um
      (Ab2) mindestens ein anionisches, monoethylenisch ungesättigtes, hydrophiles Monomer (Ab2), welches mindestens eine saure Gruppe ausgewählt aus der Gruppe von -COOH, -SO₃H oder -PO₃H₂ bzw. deren Salze handelt,
      wobei die Mengenangaben jeweils auf die Gesamtmenge aller Monomere im Copolymer bezogen sind und das Copolymer ein gewichtsmittleres Molekulargewicht M_{W} von 1^{∗}10⁶ g/mol bis 30^{∗}10⁶ g/mol aufweist, und
(B) es sich bei dem mindestens einen Tensid um ein nichtionisches und/oder anionisches Tensid handelt, welches ausgewählt wird aus der Gruppe von
   (Ba) nichtionischen Tensiden der allgemeinen Formel

      R¹⁵-O-(R¹⁶O)ₐ-H (VII),

      wobei die Reste die folgende Bedeutung haben:
      - R¹⁵:: ein C₁₀- bis C₃₆-Kohlenwasserstoffrest,
      - R¹⁶O:: unabhängig voneinander eine Alkylenoxygruppe mit 2 bis 4 Kohlenstoffatomen, mit der Maßgabe, dass mindestens 50 mol% der Reste R¹⁶ für einen 1,2-Ethylenoxygruppe stehen,
      - a:: eine Zahl von 3 bis 100,
   (Bb) anionischen Tensiden der allgemeinen Formel

      R¹⁵-O-(R¹⁷O)_{b}-R¹⁸-Y (VIII),

      wobei die Reste die folgende Bedeutung haben:
      - R¹⁵:: wie bereits definiert,
      - R¹⁷:: unabhängig voneinander eine Alkylenoxygruppe mit 2 bis 4 Kohlenstoffatomen, mit der Maßgabe, dass mindestens 30 mol% der Reste R¹⁷ für einen 1,2-Ethylenoxygruppe und/oder eine 1,2-Propylenoxygruppe stehen,
      - R¹⁸:: eine Einfachbindung oder eine zweiwertige Kohlenwasserstoffgruppe mit 1 bis 10 Kohlenstoffatomen,
      - b:: eine Zahl von 1 bis 100, und
      - Y:: eine saure Gruppe oder ein Salz davon, ausgewählt aus der Gruppe von Sulfonatgruppen, Sulfatgruppen, Phosphonatgruppen, Phosphorsäuregruppen oder Carboxylgruppen,
   (Bc) sternförmigen, nichtionischen Tensiden der allgemeinen Formel

      R¹⁹[(O-(CH-CH(R²⁰)-O)_{c}-(CH₂CH₂O)_{d}-(CH-CH(R²⁰)-O)ₑ-H]_{f} (IX),

      wobei die Reste die folgende Bedeutung haben:
      - f:: eine Zahl von 3 bis 9,
      - R¹⁹:: ein f-wertiger Kohlenwasserstoffrest,
      - R²⁰:: ein aliphatischer Kohlenwasserstoffrest mit 1 bis 3 Kohlenstoffatomen,
      - c:: eine Zahl von 0 bis 2,
      - d:: eine Zahl von 2 bis 50,
      - e:: eine Zahl von 2 bis 50,
      und wobei
      ▪ die Menge der Copolymere (A) in der Formulierung 0,02 bis 2 Gew. %,
      ▪ die Menge der Tenside (B) 0,005 bis 1,0 Gew. %,
      ▪ die Viskosität der Formulierung mindestens 5 mPas (gemessen bei 25°C), und ▪ das Gewichtsverhältnis der Copolymere zu den Tensiden (A) / (B) 2:1 bis 20:1 beträgt.

In einem weiteren Aspekt wurden wässrige Formulierungen für die Erdölförderung gefunden, welche die hydrophob assoziierenden Copolymere (A) und die Tenside (B) der genannten Art in den genannten Mengen enthalten.

Zur Erfindung ist im Einzelnen das Folgende auszuführen:
Für das erfindungsgemäße Verfahren wird eine wässrige Formulierung aus mindestens einem hydrophob assoziierenden Copolymer (A) und mindestens einem Tensid (B) eingesetzt und durch eine Injektionsbohrung in eine Erdöllagerstätte injiziert. Selbstverständlich können auch mehrere verschiedene Copolymere (A) und mehrere Tenside (B) eingesetzt werden.

### Verwendete hydrophob assoziierende Copolymere (A)

Der Begriff "hydrophob assoziierendes Copolymer" ist dem Fachmann prinzipiell bekannt. Es handelt es sich hierbei um ein wasserlösliches Copolymer, welche neben hydrophilen Molekülteilen, welche eine ausreichende Wasserlöslichkeit gewährleisten, seiten- oder endständig hydrophobe Gruppen aufweist. In wässriger Lösung können die hydrophoben Gruppen des Polymers mit sich selbst oder mit anderen, hydrophobe Gruppen aufweisenden Stoffen, aufgrund zwischenmolekularer Kräfte assoziieren. Hierdurch entsteht ein durch zwischenmolekulare Kräfte geknüpftes polymeres Netzwerk, welches das wässrige Medium verdickt.

Im Idealfalle sollten die erfindungsgemäß verwendeten Copolymere (A) in beliebigem Verhältnis mit Wasser mischbar sein. Erfindungsgemäß ist es aber ausreichend, wenn die Copolymere zumindest bei der gewünschten Einsatzkonzentration und beim gewünschten pH wasserlöslich sind. Im Regelfalle sollte die Löslichkeit des Copolymers in Wasser bei Raumtemperatur bei den Einsatzbedingungen mindestens 25 g/l betragen.

Erfindungsgemäß umfasst das wasserlösliche, hydrophob assoziierende Copolymer (A) 0,1 bis 15 Gew.-% mindestens eines monoethylenisch ungesättigten, hydrophob assoziierenden Monomers (Aa) sowie 85 bis 99,9 Gew. % mindestens zweier, davon verschiedener, monoethylenisch ungesättigter, hydrophiler Monomere (Ab). Darüber hinaus können optional weitere von den Monomeren (Aa) und (Ab) verschiedene, ethylenisch ungesättigte, bevorzugt monoethylenisch ungesättigte Monomere (Ac) in einer Menge von bis zu 14,9 Gew. % vorhanden sein. Die genannten Mengenangaben beziehen sich jeweils auf die Summe aller Monomere im Copolymer. Bevorzugt werden ausschließlich monoethylenisch ungesättigte Monomere eingesetzt.

### Monomere (Aa)

Das eingesetzte wasserlösliche, hydrophob assoziierende Copolymer (A) umfasst mindestens ein monoethylenisch ungesättigtes Monomer (Aa), welches dem Copolymer hydrophob assoziierende Eigenschaften verleiht und daher im Folgenden als "hydrophob assoziierendes Monomer" bezeichnet werden soll. Erfindungsgemäß werden die Monomere (Aa) ausgewählt aus der Gruppe von

H₂C=C(R¹)-R²-O-(-CH₂-CH(R³)-O-)ₖ-(-CH₂-CH(R⁴)-O-)ₗ-R⁵ (I),

H₂C=C(R¹)-O-(-CH₂-CH(R³)-O-)ₖ-R⁶ (II),

H₂C=C(R¹)-(C=O)-O-(-CH₂-CH(R³)-O-)ₖ-R⁶ (III).

### Monomere (Aa) der Formel (I)

Bei den Monomeren (Aa) der Formel (I) ist eine ethylenische Gruppe H₂C=C(R¹)- über eine zweiwertige, verknüpfende Gruppe -R²-O- mit einem Polyoxyalkylenrest mit Blockstruktur -(-CH₂-CH(R³)-O-)ₖ-(-CH₂-CH(R⁴)-O-)ₗ-R⁵ verbunden, wobei die beiden Blöcke -(-CH₂-CH(R³)-O-)ₖ und -(-CH₂-CH(R⁴)-O-)ₗ in der in Formel (I) dargestellten Reihenfolge angeordnet sind. Der Polyoxyalkylenrest weist entweder eine terminale OH-Gruppe (für R⁵-H) oder eine terminale Ethergruppe -OR⁵ auf (wenn es sich bei R⁵ um einen Kohlenwasserstoffrest handelt).

In der oben genannten Formel steht R¹ für H oder eine Methylgruppe.

R² steht für eine Einfachbindung oder eine zweiwertige, verknüpfende Gruppe, ausgewählt aus der Gruppe von -(CₙH₂n)- [Gruppe R^{2a}], -O-(C_{n'}H_{2n'})- [Gruppe R^{2b}]- und -C(O)-O-(C_{n"}H_{2n"})-[Gruppe R^{2c}]. In den genannten Formeln stehen n, n' und n" jeweils für eine natürliche Zahl von 1 bis 6. Mit anderen Worten gesagt handelt es sich bei der verknüpfenden Gruppe um geradkettige oder verzweigte aliphatische Kohlenwasserstoffgruppen mit 1 bis 6 Kohlenwasserstoffatomen, welche entweder direkt, über eine Ethergruppe -O- oder über eine Esterguppe -C(O)-O- mit der ethylenische Gruppe H₂C=C(R¹)- verknüpft sind. Bevorzugt handelt es sich bei den Gruppen -(CₙH₂ₙ)-, -(C_{n'}H_{2n'})- und -(C_{n"}H_{2n"})- um lineare aliphatische Kohlenwasserstoffgruppen.

Bevorzugt handelt es sich bei der Gruppe R^{2a} um eine Gruppe ausgewählt aus -CH₂-, -CH₂-CH₂- und -CH₂-CH₂-CH₂-, besonders bevorzugt ist eine Methylengruppe -CH₂-.

Bevorzugt handelt es sich bei der Gruppe R^{2b} um eine Gruppe ausgewählt aus -O-CH₂-CH₂-, - O-CH₂-CH₂-CH₂- und -O-CH₂-CH₂-CH₂-CH₂-, besonders bevorzugt ist -O-CH₂-CH₂-CH₂-CH₂-.

Bevorzugt handelt es sich bei der Gruppe R^{2c} um eine Gruppe ausgewählt aus -C(O)-O-CH₂-CH₂-, -C(O)O-CH(CH₃)-CH₂-, -C(O)O-CH₂-CH(CH₃)-, -C(O)O-CH₂-CH₂-CH₂-CH₂- und - C(O)O-CH₂-CH₂-CH₂-CH₂-CH₂-CH₂-, besonders bevorzugt sind -C(O)-O-CH₂-CH₂- und - C(O)O-CH₂-CH₂-CH₂-CH₂- und ganz besonders bevorzugt ist -C(O)-O-CH₂-CH₂-.

Besonders bevorzugt handelt es sich bei der Gruppe R² um eine Gruppe R^{2a} oder R^{2b}, besonders bevorzugt um eine Gruppe R^{2b} also um Monomere auf Basis von Vinylethern.

Weiterhin besonders bevorzugt handelt es sich bei R² um eine Gruppe ausgewählt aus -CH₂- oder -O-CH₂-CH₂-CH₂-CH₂-, ganz besonders bevorzugt ist -O-CH₂-CH₂-CH₂-CH₂-.

Die Monomere (I) weisen weiterhin einen Polyoxyalkylenrest auf, der aus den Einheiten -(-CH₂-CH(R³)-O-)ₖ und -(-CH₂-CH(R⁴)-O-)ₗ besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Im Block -(-CH₂-CH(R³)-O-)ₖ stehen die Reste R³ unabhängig voneinander für H, Methyl oder Ethyl, bevorzugt H oder Methyl mit der Maßgabe, dass es sich bei mindestens 50 mol % der Reste R³ um H handelt. Bevorzugt handelt es sich bei mindestens 75 mol % der Reste R³ um H, besonders bevorzugt bei mindestens 90 mol % und ganz besonders bevorzugt ausschließlich um H. Bei dem genannten Block handelt es sich also um einen Polyoxyethylenblock, der optional noch gewisse Anteile Propylenoxid- und/oder Butylenoxideinheiten aufweisen kann, bevorzugt um einen reinen Polyoxyethylenblock.

Bei der Anzahl der Alkylenoxideinheiten k handelt es sich um eine Zahl von 10 bis 150, bevorzugt 12 bis 100, besonders bevorzugt 15 bis 80, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R⁴)-O-)- stehen die Reste R⁴ unabhängig voneinander für Kohlenwasserstoffstoffreste von mindestens 2 Kohlenstoffatomen, bevorzugt mindestens 3, besonders bevorzugt 3 bis 10 und ganz besonders bevorzugt 3 bis 8 Kohlenstoffatomen und beispielsweise 3 oder 4 Kohlenstoffatomen. Es kann sich hierbei um einen aliphatischen und/oder aromatischen, linearen oder verzweigten Kohlenstoffrest handeln. Bevorzugt handelt es sich um aliphatische Reste.

Beispiele geeigneter Reste R⁴ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei den Resten R⁴ kann es sich weiterhin um Ethergruppen der allgemeinen Formel -CH₂-O-R^{4'} handeln, wobei es sich bei R^{4'} um einen aliphatischen und/oder aromatischen, linearen oder verzweigten Kohlenwasserstoffrest mit mindestens 2 Kohlenstoffatomen, bevorzugt mindestens 3 und besonders bevorzugt 3 bis 10 Kohlenstoffatomen handelt. Beispiele für Reste R^{3'} umfassen n-Propyl, n-Butyl, n-Pentyl, n-Hexyl, 2-Ethylhexyl, n-Heptyl, n-Octyl, n-Nonyl n-Decyl oder Phenyl.

Bei dem Block -(-CH₂-CH(R⁴)-O-)ₗ- handelt es sich also um einen Block, der aus Alkylenoxideinheiten mit mindestens 4 Kohlenstoffatomen, bevorzugt mindestens 5 Kohlenstoffatomen, insbesondere 5 bis 10 Kohlenstoffatomen, und/oder Glycidylethern mit einer Ethergruppe von mindestens 2, bevorzugt mindestens 3 Kohlenstoffatomen besteht. Bevorzugt als Reste R³ sind die genannten Kohlenwasserstoffeste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten I handelt es sich um eine Zahl von 5 bis 25, bevorzugt 6 bis 20, besonders bevorzugt 8 bis 18, ganz besonders bevorzugt 10 bis 15 und beispielsweise ca. 12.

Bei dem Rest R⁵ handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei R⁵ um H, Methyl oder Ethyl, besonders bevorzugt um H oder Methyl und ganz besonders bevorzugt um H.

Bei den Monomeren der Formel (I) ist also eine terminale, monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxiddeinheiten, bevorzugt mindestens Pentenoxideinheiten oder Einheiten höherer Alkylenoxide wie beispielsweise Dodecenoxid aufgebaut ist. Der zweite Block weist eine terminale -OR⁵-Gruppe, insbesondere eine OH-Gruppe auf. Der terminale Block -(-CH₂-CH(R⁴)-O-) mit den Resten R⁴ ist für das hydrophobe Assoziieren der unter Verwendung der Monomere (Aa) hergestellten Copolymere verantwortlich. Verethern der OH-Endgruppe ist eine Option, welche vom Fachmann je nach den gewünschten Eigenschaften des Copolymers gewählt werden kann. Eine terminale Kohlenwasserstoffgruppe ist für das hydrophobe Assoziieren aber nicht erforderlich, sondern das hydrophobe Assoziieren funktioniert auch bei einer terminalen OH-Gruppe.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block - (-CH₂-CH(R³)-O-)ₖ noch geringe Mengen an Einheiten -CH₂-CH(R⁴)-O- und der zweite Block -(-CH₂-CH(R⁴)-O-)ₗ-geringe Mengen an Einheiten -CH₂-CH(R³)-O- aufweisen, wobei diese Einheiten aber nicht statistisch über den Block verteilt sind, sondern in der genannten Übergangszone angeordnet sind.

### Herstellung der Monomere (Aa) der Formel (I)

Die Herstellung der hydrophob assoziierenden Monomere (Aa) der Formel (I) kann nach dem Fachmann prinzipiell bekannten Methoden erfolgen.

Zur Herstellung der Monomere (Aa) geht man in einem bevorzugten Herstellverfahren von geeigneten monoethylenisch ungesättigten Alkoholen (IV) aus, welche anschließend in einem zweistufigen Prozess alkoxyliert werden, so dass die erwähnte Blockstruktur erhalten wird. Man erhält Monomere (Aa) der Formel (I) mit R⁵ = H. Diese können optional in einem weiteren Verfahrensschritt verethert werden.

Die Art der zu verwendenden ethylenisch ungesättigten Alkohole (IV) richtet sich hierbei insbesondere nach der Gruppe R².

Sofern R² für eine Einfachbindung steht, geht man von Alkoholen (IV) der allgemeinen Formel H₂C=C(R¹)-O-(-CH₂-CH(R⁷)-O-)_{d}-H (IVa), wobei R¹ die oben definierte Bedeutung hat, R⁷ für H und/oder CH₃, bevorzugt H und d für eine Zahl von 1 bis 5, bevorzugt 1 oder 2 steht. Beispiele derartiger Alkohole umfassen Diethylenglykolvinylether H₂C=CH-O-CH₂-CH₂-O-CH₂-CH₂-OH oder Dipropylenglykolvinylether H₂C=CH-O-CH₂-CH(CH₃)-O-CH₂-CH(CH₃)-OH, bevorzugt ist Diethylenglykolvinylether.

Zur Herstellung von Monomeren (Aa) bei denen R² nicht für eine Einfachbindung steht, können Alkohole der allgemeinen Formel H₂C=C(R¹)-R²-OH (IVb) oder bereits Alkoxygruppen aufweisende Alkoholen der Formel H₂C=C(R¹)-R²-O-(-CH₂-CH(R⁷)-O-)_{d}-H (IVc) eingesetzt werden, wobei R⁷ und d die oben definierte Bedeutung haben, und R² jeweils aus der Gruppe von R^{2a}, R^{2b} und R^{2c} gewählt wird.

Zur Herstellung der Monomere mit verknüpfender Gruppe R^{2a} geht bevorzugt man von Alkoholen der Formel H₂C=C(R¹)-(CₙH₂ₙ)-OH, insbesondere H₂C=CH-(CₙH₂ₙ)-OH oder Alkoholen der Formel H₂C=C(R¹)-O-(-CH₂-CH(R⁷)-O-)_{d}-H aus. Beispiele bevorzugter Alkohole umfassen Allylalkohol H₂C=CH-CH₂-OH oder Isoprenol H₂C=C(CH₃)-CH₂-CH₂-OH.

Zur Herstellung der Monomere mit verknüpfender Gruppe R^{2b} geht man von Vinylethern der Formel H₂C=C(R¹)-O-(C_{n'}H_{2n'})-OH, bevorzugt H₂C=CH-O-(C_{n'}H_{2n'})-OH aus. Besonders bevorzugt kann ω-Hydroxybutylvinylether H₂C=CH-O-CH₂-CH₂-CH₂-CH₂-OH eingesetzt werden.

Zur Herstellung der Monomere mit verknüpfender Gruppe R^{2c} geht man von Hydroxyalkyl(meth)acrylaten der allgemeinen Formel H₂C=C(R¹)-C(O)-O-(C_{n"}H_{2n"})-OH, bevorzugt H₂C=C(R¹)-C(O)-O-(C_{n"}H_{2n"})-OH aus. Beispiele bevorzugter Hydroxyalkyl(meth)acrylate umfassen Hydroxyethyl(meth)acrylat H₂C=C(R¹)-C(O)-O-CH₂-CH₂-OH sowie Hydroxybutyl(meth)acrylat H₂C=C(R¹)-C(O)-O-CH₂-CH₂-CH₂-CH₂-OH.

Die genannten Ausgangsverbindungen werden alkoxyliert, und zwar in einem zweistufigen Prozess zunächst mit Ethylenoxid, optional im Gemisch mit Propylenoxid und/oder Butylenoxid und in einem zweiten Schritt mit Alkylenoxiden der allgemeinen Formeln (Xa) bzw. (Xb) 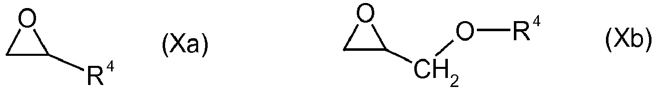 wobei R⁴ in (Xa) bzw. R^{4'} in (Xb) die eingangs definierte Bedeutung haben.

Die Durchführung einer Alkoxylierung einschließlich der Herstellung von Blockcopolymeren aus verschiedenen Alkylenoxiden ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate sowie die Orientierung von Alkylenoxideinheiten in einer Polyetherkette beeinflussen kann.

Die Alkoxylate können beispielsweise durch basenkatalysierte Alkoxylierung hergestellt werden. Dazu kann der als Ausgangsmaterial verwendete Alkohol in einem Druckreaktor mit Alkalihydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und ein einem ersten Schritt Ethylenoxid, optional im Gemisch mit Propylen- und/oder Butylenoxid bei Temperaturen von 60 bis 180°C, bevorzugt 130 bis 150°C schrittweise zugegeben. Die Zugabe erfolgt typischerweise innerhalb von 2 bis 5 h, ohne dass die Erfindung darauf beschränkt sein soll. Nach Beendigung der Zugabe lässt man das Reaktionsgemisch zweckmäßigerweise nachreagieren, beispielsweise für ½ h bis 1 h. In einem zweiten Schritt dosiert man anschließend Alkylenoxide der allgemeinen Formel (Xb) schrittweise zu. Die Reaktionstemperatur in der zweiten Stufe kann beibehalten werden oder auch verändert werden. Bewährt hat sich eine um ca. 10 bis 25°C niedrigere Reaktionstemperatur als in der ersten Stufe.

Die Alkoxylierung kann auch mittels Techniken vorgenommen werden, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der als Ausgangsmaterial verwendete Alkohol mit dem Katalysator versetzt werden, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben.

Die Alkoxylierung kann weiterhin auch säurekatalysiert vorgenommen werden. Bei den Säuren kann es sich um Brönstedt- oder Lewissäuren handeln. Zur Durchführung der Reaktion kann der als Ausgangsmaterial verwendete Alkohol mit dem Katalysator versetzt, die Mischung wie oben beschrieben entwässert werden und mit den Alkylenoxiden wie beschrieben umgesetzt werden. Am Ende der Reaktion kann der saure Katalysator durch Zugabe einer Base, beispielsweise KOH oder NaOH neutralisiert und bei Bedarf abfiltriert werden.

Für den Fachmann auf dem Gebiet der Polyalkylenoxide ist klar, dass die Orientierung der Kohlenwasserstoffeste R⁴ sowie gegebenenfalls R³ von den Bedingungen der Alkoxylierung abhängen kann, beispielsweise vom zur Alkoxylierung gewählten Katalysator. Die Alkylenoxidgruppen können also sowohl in der Orientierung -(-CH₂-CH(R⁴)-O-) oder auch in inverser Orientierung -(-CH(R⁴)-CH₂-O-)- in das Monomer eingebaut werden. Die Darstellung in Formel (I) soll daher nicht als auf eine bestimmte Orientierung der Gruppen R³ bzw. R⁴ beschränkt angesehen werden.

Sofern die terminale OH-Gruppe der Monomere (Aa) der Formel (I) (d.h. R⁵ = H) verethert werden sollen, kann dies mit dem Fachmann prinzipiell bekannten, üblichen Alkylierungsmitteln erfolgen, beispielsweise Alkylsulfaten. Zur Veretherung kann insbesondere Dimethylsulfat oder Diethylsulfat eingesetzt werden.

Das beschriebene bevorzugte Herstellverfahren für die Monomere (I) hat den Vorteil, dass die Bildung möglicherweise vernetzend wirkender Nebenprodukte mit zwei ethylenisch ungesättigen Gruppen weitgehend vermieden wird. Dementsprechend lassen sich Copolymere mit besonders niedrigem Gelanteil erhalten.

### Monomere (Aa) der Formeln (II) und (III)

Bei den Monomeren der Formeln (II) und (III) haben R¹, R³ und k die bereits geschilderte Bedeutung.

R⁶ steht für einen aliphatischen und/oder aromatischen, geradkettigen oder verzweigten Kohlenwasserstoffrest mit 8 bis 40 Kohlenstoffatomen, bevorzugt 12 bis 32 C-Atomen. Beispielsweise kann es sich um n-Alkylgruppen wie n-Octyl-, n-Decyl- oder n-Dodecylgruppen, Phenylgruppen sowie insbesondere substituierte Phenylgruppen handeln. Bei Substituenten an den Phenylgruppen kann es sich um Alkylgruppen, beispielsweise C₁- bis C₆-Alkylgruppen handeln, bevorzugt um Styrylgruppen. Besonders bevorzugt ist eine Tristyrylphenylgruppe.

Die hydrophob assoziierenden Monomere der Formeln (II) bzw. (III) und deren Herstellung sind dem Fachmann prinzipiell bekannt, beispielsweise aus EP 705 854 A1.

### Mengen der Monomere (Aa)

Die Menge der monoethylenisch ungesättigten, hydrophob assoziierenden Monomere (Aa) beträgt 0,1 bis 15 Gew.-% bezogen auf die Gesamtmenge aller Monomere im Copolymer, insbesondere 0,1 bis 10 Gew.-%, bevorzugt 0,2 bis 5 Gew.-% und besonders bevorzugt 0,5 bis 2 Gew.-%.

Besonders bevorzugt werden Monomere (Aa) der allgemeinen Formel (I) zur Herstellung der erfindungsgemäßen Copolymere eingesetzt; ganz besonders bevorzugt Monomere (a) der allgemeinen Formel (I), bei denen R² für einen Rest R^{2b} steht.

### Monomere (Ab)

Über die Monomere (Aa) hinaus umfasst das erfindungsgemäß verwendete, hydrophob assoziierende Copolymer mindestens zwei, davon verschiedene, monoethylenisch ungesättigte, hydrophile Monomere (Ab).

Besonders bevorzugt sind die eingesetzten, hydrophilen Monomere (Ab) in beliebigem Verhältnis mit Wasser mischbar, zur Ausführung der Erfindung ist es jedoch ausreichend, dass das erfindungsgemäße, hydrophob assoziierende Copolymer die eingangs erwähnte Wasserlöslichkeit besitzt. Im Regelfalle sollte die Löslichkeit der Monomere (Ab) in Wasser bei Raumtemperatur mindestens 50 g/l, bevorzugt mindestens 150 g/l und besonders bevorzugt mindestens 250 g/l betragen.

Erfindungsgemäß umfasst das Copolymer mindestens ein mindestens ein neutrales, monethylenisch ungesättigtes, hydrophiles Monomer (Ab1), ausgewählt aus der Gruppe von (Meth)acrylamid, N-Methyl(meth)acrylamid, N,N'-Dimethyl(meth)acrylamid oder N-Methylol(meth)acrylamid. Bevorzugt handelt es sich um (Meth)acrylamid, insbesondere um Acrylamid. Sofern Gemische verschiedener Monomere (Ab1) eingesetzt werden, sollte es sich bei zumindest 50 mol % der Monomere (Ab1) um (Meth)acrylamid handeln.

Erfindungsgemäß umfasst das verwendete Copolymer weiterhin mindestens ein hydrophiles, monoethylenisch ungesättigtes anionisches Monomer (Ab2), welches mindestens eine saure Gruppe ausgewählt aus der Gruppe von -COOH, -SO₃H oder -PO₃H₂ bzw. deren Salze umfasst. Bevorzugt sind COOH-Gruppen und/oder -SO₃H-Gruppen umfassende Monomere, besonders bevorzugt -SO₃H-Gruppen umfassende Monomere. Selbstverständlich kann es sich auch um die Salze der sauren Monomere handeln. Geeignete Gegenionen umfassen insbesondere Alkalimetallionen wie Li⁺, Na⁺ oder K⁺ sowie Ammoniumionen wie NH₄⁺ oder Ammoniumionen mit organischen Resten.

Beispiele COOH-Gruppen umfassender Monomere umfassen Acrylsäure, Methacrylsäure, Crotonsäure, Itaconsäure, Maleinsäure oder Fumarsäure. Bevorzugt ist Acrylsäure.

Beispiele Sulfonsäuregruppen umfassender Monomere umfassen Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure. Bevorzugt sind Vinylsulfonsäure, Allylsulfonsäure oder 2-Acrylamido-2-methylpropansulfonsäure und besonders bevorzugt ist oder 2-Acrylamido-2-methylpropansulfonsäure.

Beispiele Phosphonsäuregruppen umfassender Monomere umfassen Vinylphosphonsäure, Allylphosphonsäure, N-(Meth)acrylamidoalkylphosphonsäuren oder (Meth)acryloyloxyalkylphosphonsäuren, bevorzugt ist Vinylphosphonsäure.

Der Vollständigkeit halber sei erwähnt, dass die Monomere (Ab1) im Zuge der Herstellung und Verwendung unter Umständen zumindest teilweise zu (Meth)acrylsäure hydrolysieren können. Die erfindungsgemäß verwendeten Copolymere können dementsprechend (Meth)acrylsäureeinheiten umfassen, auch wenn zur Synthese gar keine (Meth)acrylsäureeeinheiten eingesetzt wurden. Die Tendenz zur Hydrolyse der (Ab1) Monomere nimmt mit zunehmendem Gehalt an Sulfonsäuregruppen ab. Dementsprechend ist die Anwesenheit von Sulfonsäuregruppe im erfindungsgemäß verwendeten Copolymer empfehlenswert.

Die erfindungsgemäß verwendeten Copolymere können darüber hinaus optional mindestens ein monoethylenisch ungesättigtes, kationisches, Ammoniumionen aufweisendes Monomer (Ab3) umfassen.

Geeignete kationische Monomere (Ab3) umfassen insbesondere Ammoniumgruppen aufweisende Monomere, insbesondere Ammoniumderivate von N-(ω-Aminoalkyl)(meth)acrylamiden oder ω-Aminoalkyl(meth)acrylestern.

Insbesondere kann es sich bei Ammoniumgruppen aufweisenden Monomeren (Ab3) um Verbindungen der allgemeinen Formeln H₂C=C(R⁸)-CO-NR⁹-R¹⁰-NR¹¹₃⁺ X⁻ (Va) und/oder H₂C=C(R⁸)-COO-R¹⁰-NR¹¹₃⁺ X⁻ (Vb) handeln. Hierbei steht R⁸ für H oder Methyl, R⁹ für H oder eine C₁- bis C₄-Alkylgruppe, bevorzugt H oder Methyl und R¹⁰ für eine bevorzugt lineare C₁- bis C₄-Alkylengruppe, beispielsweise eine 1,2-Ethylengruppe -CH₂-CH₂- oder eine 1,3-Proplyengruppe -CH₂-CH₂-CH₂-.

Bei den Resten R¹¹ handelt es sich unabhängig voneinander um C₁- bis C₄-Alkylreste, bevorzugt Methyl oder eine Gruppe der allgemeinen Formel -R¹²-SO₃H, wobei R¹² für eine bevorzugt lineare C₁- bis C₄-Alkylengruppe oder eine Phenylgruppe steht, mit der Maßgabe, dass es sich im Regelfalle bei nicht mehr als einem der Substituenten R¹¹ um einen Sulfonsäuregruppen aufweisenden Substituenten handelt. Besonders bevorzugt handelt es sich bei den drei Substituenten R¹¹ um Methylgruppen, d.h. das Monomer weist eine Gruppe -N(CH₃)₃⁺ auf. X⁻ steht in obiger Formel für ein einwertiges Anion, beispielsweise Cl⁻. Selbstverständlich kann X⁻ auch für einen entsprechenden Bruchteil eines mehrwertigen Anions stehen, obwohl dies nicht bevorzugt ist. Beispiele bervorzugter Monomere (Ab3) der allgemeinen Formel (Va) bzw. (Vb) umfassen Salze von 3-Trimethylammonium-propyl(meth)acrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Die erfindungsgemäß verwendeten Copolymere können darüber hinaus noch weitere, von den hydrophilen Monomeren (Ab1), (Ab2) und (Ab3) verschiedene monoethylenisch ungesättigte hydrophile Monomere (Ab4) umfassen. Beispiele derartiger Monomere umfassen Hydroxy- und oder Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹)-COO-(-CH₂-CH(R¹³)-O-)_{b}-R¹⁴ (VIa) bzw. H₂C=C(R¹)-O-(-CH₂-CH(R¹³)-O-)_{b}-R¹⁴ (VIb) wobei R¹ wie oben definiert ist und b für eine Zahl von 2 bis 200, bevorzugt 2 bis 100 steht. Bei den Resten R¹³ handelt es sich unabhängig voneinander um H, Methyl oder Ethyl, bevorzugt H oder Methyl, mit der Maßgabe, dass es sich bei mindestens 50 mol % der Reste R¹³ um H handelt. Bevorzugt handelt es sich bei mindestens 75 mol % der Reste R¹³ um H, besonders bevorzugt bei mindestens 90 mol % und ganz besonders bevorzugt ausschließlich um H. Bei dem Rest R¹⁴ handelt es sich um H, Methyl oder Ethyl, bevorzugt H oder Methyl. Weitere Beispiele von Monomeren (Ab4) umfassen N-Vinylderivate wie beispielsweise N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden.

Die Menge aller hydrophilen Monomere (Ab) im erfindungsgemäßen Copolymer beträgt erfindungsgemäß 85 bis 99,9 Gew.-% bezogen auf die Gesamtmenge aller Monomere im Copolymer, bevorzugt 90 bis 99,8 Gew.-%.

Die Menge der neutralen, hydrophilen Monomere (Ab1) beträgt hierbei in der Regel 30 bis 95 Gew. %, bevorzugt 30 bis 85 Gew. % und besonders bevorzugt 30 bis 70 Gew. % bezüglich der Gesamtmenge aller eingesetzten Monomere.

Sofern das Copolymer nur neutrale Monomere (Ab1) und anionische Monomere (Ab2) umfasst, hat es sich bewährt, die neutralen Monomere (Ab1) in einer Menge 30 bis 95 Gew. % und die anionischen Monomere (Ab2) in einer Menge von 4,9 bis 69,9 Gew. % einzusetzen, wobei die Menge jeweils auf die Gesamtmenge aller eingesetzten Monomere bezogen ist. Bevorzugt werden bei dieser Ausführungsform die Monomere (Ab1) in einer Menge 30 bis 80 Gew. % und die anionischen Monomere (Ab2) in einer Menge von 19,9 bis 69,9 Gew. % eingesetzt, und besonders bevorzugt werden die Monomere (Ab1) in einer Menge 40 bis 70 Gew. % und die anionischen Monomere (Ab2) in einer Menge von 29,9 bis 59,9 Gew. % eingesetzt

Sofern das Copolymer neutrale Monomere (Ab1), anionische Monomere (Ab2) und kationische Monomere (Ab3) umfasst, hat es sich bewährt, die neutralen Monomere (Ab1) in einer Menge von 30 bis 95 Gew. % und die anionischen (Ab2) und kationischen Monomere (Ab3) zusammen in einer Menge von 4,9 bis 69,9 Gew. % einzusetzen, mit der Maßgabe, dass das molare Verhältnis (Ab2) / (Ab3) 0,7 bis 1,3 beträgt. Bevorzugt beträgt das molare Verhältnis (Ab2) / (Ab3) 0,8 bis 1,2 und beispielsweise 0,9 bis 1,1. Durch diese Maßnahme lassen sich Copolymere erhalten, welche besonders unempfindlich auf Salzfracht reagieren. Bevorzugt werden bei dieser Ausführungsform die Monomere (Ab1) in einer Menge 30 bis 80 Gew. % und die anionischen und kationischen Monomere (Ab2) + (Ab3) zusammen in einer Menge von 19,9 bis 69,9 Gew. % eingesetzt, und besonders bevorzugt werden die Monomere (Ab1) in einer Menge 40 bis 70 Gew. % und die anionischen und kationischen Monomere (Ab2) + (Ab3) zusammen in einer Menge von 29,9 bis 59,9 Gew. % eingesetzt, wobei jeweils das bereits genannte molare Verhältnis eingehalten werden sollte.

### Monomere (Ac)

Neben den hydrophilen Monomeren (Aa) und (Ab) können die erfindungsgemäßen Copolymere optional von den Monomeren (Aa) und (Ab) verschiedene ethylenisch ungesättigte Monomere, bevorzugt monoethylenisch ungesättigte Monomere (Ac) umfassen. Selbstverständlich können auch Gemische mehrerer verschiedener Monomere (Ac) eingesetzt werden.

Derartige Monomere können zur Feinsteuerung der Eigenschaften des erfindungsgemäß verwendeten Copolymers verwendet werden. Falls überhaupt vorhanden, kann die Menge derartiger optional vorhandener Monomere (Ac) bis zu 14,9 Gew. % betragen, bevorzugt bis zu 9,9 Gew. %, besonders bevorzugt bis zu 4,9 Gew. %, jeweils bezogen auf die Gesamtmenge aller Monomere. Ganz besonders bevorzugt sind keine Monomere (Ac) vorhanden.

Bei den Monomeren (Ac) kann es sich beispielsweise um monoethylenisch ungesättigte Monomere handeln, welche einen hydrophoberen Charakter haben als die hydrophilen Monomere (Ab) und die dementsprechend nur in geringem Maße wasserlöslich sind. Im Regelfalle beträgt die Löslichkeit der Monomere (Ac) in Wasser bei Raumtemperatur weniger als 50 g/l, insbesondere weniger als 30 g/l. Beispiele derartiger Monomere umfassen N-Alkyl- und N,N,'-Dialkyl(meth)acrylamide, wobei die Anzahl der Kohlenstoffatome in den Alkylresten zusammen zusammen mindestens 3, bevorzugt mindestens 4 beträgt. Beispiele derartiger Monomere umfassen N-Butyl(meth)acrylamid, N-Cyclohexyl(meth)acrylamid oder N-Benzyl(meth)acrylamid.

### Herstellung der hydrophob assoziierenden Copolymere

Die erfindungsgemäß verwendeten Copolymere können nach dem Fachmann prinzipiell bekannten Methoden durch radikalische Polymerisation der Monomere (Aa), (Ab) sowie optional (Ac) hergestellt werden, beispielsweise durch Lösungs- oder Gelpolymerisation in wässriger Phase.

Zur Polymerisation werden die Monomere (Aa), (Ab), optional (Ac), Initiatoren sowie optional weitere Hilfsstoffe zur Polymerisation in einem wässrigen Medium eingesetzt.

In einer bevorzugten Ausführungsform wird die Herstellung mittels Gelpolymerisation in wässriger Phase vorgenommen. Zur Gelpolymerisation wird zunächst eine Mischung aus den Monomeren (Aa), (Ab) sowie optional (Ac), Initiatoren sowie gegebenenfalls weiteren Hilfsstoffen mit Wasser oder einem wässrigen Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 50 Gew.-%, bevorzugt mindestens 80 Gew.-% und besonders bevorzugt mindestens 90 Gew.-% beträgt. Zu nennen als organische Lösemittel sind hierbei insbesondere mit Wasser mischbare Alkohole wie Methanol, Ethanol oder Propanol. Saure Monomere können vor der Polymerisation ganz oder teilweise neutralisiert werden. Die Konzentration aller Komponenten mit Ausnahme der Lösemittel im Zuge der Polymerisation beträgt üblicherweise ca. 20 bis 60 Gew.-%, bevorzugt ca. 30 bis 50 Gew.-%. Die Polymerisation sollte insbesondere bei einem pH-Wert im Bereich von 5,0 bis 7,5 und vorzugsweise bei einem pH-Wert von 6,0 durchgeführt werden.

### Polymerisation in Gegenwart einer nicht polymerisierbaren, grenzflächenaktiven Verbindung

In einer bevorzugten Ausführungsform der Erfindung werden die verwendeten Copolymere in Gegenwart mindestens einer nicht-polymerisierbaren, oberflächenaktiven Verbindung (T) hergestellt.

Bei der nicht polymerisierbaren, oberflächenaktiven Verbindung (T) handelt es sich vorzugsweise um mindestens ein nicht-ionisches Tensid, aber auch anionische und kationische Tenside sind geeignet, sofern sie an der Polymerisationsreaktion nicht teilnehmen. Es kann sich insbesondere um Tenside, bevorzugt nichtionische Tenside der allgemeinen Formel R¹³-Y' handeln, wobei R¹³ für einen Kohlenwasserstoffrest mit 8 bis 32, bevorzugt 10 bis 20 und besonders bevorzugt 12 bis 18 Kohlenstoffatomen steht und Y' für eine hydrophile Gruppe, bevorzugt eine nichtionische hydrophile Gruppe, insbesondere eine Polyalkoxygruppe.

Bei dem nichtionischen Tensid handelt es sich bevorzugt um einen ethoxylierten langkettigen, aliphatischen Alkohol, welcher optional aromatische Anteile enthalten kann.
Exemplarisch seinen genannt: C₁₂C₁₄-Fettalkoholethoxylate, C₁₆C₁₈-Fettalkoholethoxylate, C₁₃-Oxoalkoholethoxylate, C₁₀-Oxoalkoholethoxylate, C₁₃C₁₅-Oxoalkoholethoxylate, C₁₀-Guerbetalkoholethoxylate und Alkylphenolethoxylate. Bewährt haben sich insbesondere Verbindungen mit 5 bis 20 Ethylenoxyeinheiten, bevorzugt 8 bis 18 Ethylenoxyeinheite. Optional können auch noch geringe Mengen von höheren Alkylenoxyeinheiten, insbesondere Propylenoxy- und/oder Butylenoxyoxyeinheiten vorhanden sein, wobei die Menge als Ethylenoxyeinheiten aber in der Regel mindestens 80 mol % bezüglich aller Alkylenoxyeinheiten betragen sollte.

Geeignet sind insbesondere Tenside ausgewählt aus der Gruppe der ethoxylierten Alkylphenole, der ethoxylierten, gesättigten iso-C13-Alkoholen und/oder der ethoxylierten C10-Guerbetalkoholen, wobei jeweils 5 bis 20 Ethylenoxyeinheiten, bevorzugt 8 bis 18 Ethylenoxyeinheiten in Alkoxyresten vorhanden sind.

Überraschenderweise führt der Zusatz nicht polymerisierbarer, grenzflächenaktiver Verbindungen (T) während der Polymerisation zu einer deutlichen Verbesserung anwendungstechnischen Eigenschaften des Copolymers beim Polymerfluten. Insbsondere wird die Verdickungswirkung erhöht und außerdem reduziert sich der Gelanteil des Copolymers. Dieser Effekt lässt sich vermutlich folgendermaßen erklären, ohne dass die Erfindung damit auf diese Erklärung festgelegt sein soll. Bei der Polymerisation ohne Anwesenheit eines Tensids bilden die hydrophob assoziierenden Comonomere (Aa) in dem wässrigen Reaktionsmedium Mizellen. Bei der Polymerisation führt dies dazu, dass die hydrophob assoziierenden Bereiche blockweise in das Polymer eingebaut werden. Ist nun erfindungsgemäß bei der Herstellung der Copolymere eine zusätzliche oberflächenaktive Verbindung anwesend, bilden sich gemischte Mizellen. Diese gemischten Mizellen enthalten polymerisierbare und nicht polymerisierbare Anteile. Dadurch werden dann die hydrophob assoziierenden Monomere in kürzeren Blöcken eingebaut. Gleichzeitig ist die Anzahl dieser kürzeren Blöcke pro Polymerkette größer. Somit unterscheidet sich der Aufbau der in Gegenwart eines Tensids hergestellten Copolymere von denen ohne Anwesenheit eines Tensids.

Die nicht polymerisierbaren, grenzflächenaktiven Verbindungen (T) können im Regelfalle in einer Menge von 0,1 bis 5 Gew. % bezüglich der Menge aller eingesetzten Monomere eingesetzt werden.

Das Gewichtsverhältnis der eingesetzten nicht polymerisierbaren, grenzflächenaktiven Verbindungen (T) zu den Monomeren (Aa) beträgt in der Regel 4:1 bis 1:4, bevorzugt 2:1 bis 1:2, besonders bevorzugt 1,5 : 1 bis 1:1,5 und beispielsweise ca. 1:1.

### Durchführung der Polymerisation

Zur Polymerisation werden zunächst die erforderlichen Komponenten miteinander gemischt. Auf die Reihenfolge, mit der die Komponenten zur Polymerisation gemischt werden, kommt es nicht an, es ist lediglich wichtig, dass bei der bevorzugten Polymerisationsmethode die nicht polymerisierbare, grenzflächenaktive Verbindung (T) noch vor der Initiierung der Polymerisation dem wässrigen Polymerisationsmedium zugesetzt wird.

Die Mischung wird anschließend thermisch und/oder fotochemisch polymerisiert, vorzugsweise bei -5 °C bis 80 °C. Sofern thermisch polymerisiert wird, setzt man bevorzugt Polymerisationsinitiatoren ein, die schon bei vergleichsweise niedriger Temperatur die Polymerisation starten können, wie beispielsweise Redoxinitiatoren. Die thermische Polymerisation kann schon bei Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 bis 10 °C vorgenommen. Man kann auch fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis +10 °C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr 99 % erreichen.

In einer weiteren bevorzugten Ausführungsform der Polymerisation kann man auch die Reaktion mit einer Mischung aus einem Redoxinitiatorsystem sowie einem thermischen Initiatior, der erst bei höheren Temperaturen zerfällt ausführen. Hierbei kann es sich beispielsweise um einen wasserlöslichen Azoinitiator handeln, der im Temperaturbereich von 40°C bis 70°C zerfällt. Die Polymerisation startet hier zunächst bei niedrigen Temperaturen von beispielsweise 0 bis 10°C durch das Redoxinitiatorsystem. Durch die freiwerdende Reaktionswärme erwärmt sich die Mischung und hierdurch wird zusätzlich die Polymerisation durch den erst bei höheren Temperaturen zerfallenden Initiator gestartet.

Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man eine Polymerisationsapparatur, welche ein Transportband zur Aufnahme der zu polymerisierenden Mischung verfügt. Das Transportband ist mit Einrichtungen zum Erwärmen und/oder zum Bestrahlen mit UV-Strahlung ausgestattet. Hiernach gießt man die Mischung mittels einer geeigneten Vorrichtung an einen Ende des Bandes auf, im Zuge des Transportes in Bandrichtung polymerisiert die Mischung und am anderen Ende des Bandes kann man das feste Gel abnehmen.

Das erhaltene Gel wird nach der Polymerisation vorzugsweise zerkleinert und getrocknet. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das hydrophob assoziierende Copolymer als Granulat oder Pulver.

Weitere Einzelheiten zur Durchführung einer Gelpolymerisation sind beispielsweise in DE 10 2004 032 304 A1, Abschnitte [0037] bis [0041] offenbart.

Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen. Um dies zu vermeiden, kann den erfindungsgemäßen Polymeren bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff handeln.

Die erhaltenen Copolymere (A) weisen in der Regel ein gewichtsmittleres Molekulargewicht M_{w} von 1^{∗}10⁶ g/mol bis 30^{∗}10⁶ g/mol auf, bevorzugt 5^{∗}10⁶ g/mol bis 20^{∗}10⁶ g/mol.

### Bevorzugte Copolymere

Zur Ausführung des Verfahrens besonders bevorzugte Copolymere umfassen Monomere (Aa) der allgemeinen Formel H₂C=CH-O-(CH₂)_{n'}-O-(-CH₂-CH₂-O-)ₖ-(-CH₂-CH(R⁴)-O-)ₗ-H (la), wobei n' für 2 bis 6, bevorzugt 2 bis 4 und besonders bevorzugt 4 steht. R⁴ steht in der bevorzugten Variante für einen Kohlenwasserstoffrest mit 3 bis 10 Kohlenstoffatomen, insbesondere für einen n-Propylrest. Weiterhin steht in Formel (la) k für eine Zahl von 20 bis 30 und I für eine Zahl von 6 bis 20, bevorzugt 8 bis 18. Die Menge der Monomere (Aa) der Formel (la) beträgt 0,2 bis 5 Gew.-%, bevorzugt 0,5 bis 2 Gew.-%. Als Monomer (Ab1) umfasst das bevorzugte Copolymer 40 bis 60 Gew. % Acrylamid und als Monomer (Ab2) 35 bis 55 Gew. % eines Sulfonsäuregruppen aufweisenden Monomers (Ab2), bevorzugt 2-Acrylamido-2-methylpropansulfonsäure bzw. Salze davon.
Weiterhin zur Ausführung des Verfahrens bevorzugte Copolymere umfassen ebenfalls 0,2 bis 5 Gew. %, bevorzugt 0,5 bis 2 Gew. % Monomere (Aa) der allgemeinen Formel (la) sowie 30 bis 40 Gew. % Acrylamid. Sie umfassen darüber hinaus 25 bis 35 Gew. % mindestens eines Sulfonsäuregruppen aufweisenden Monomers (Ab2), bevorzugt 2-Acrylamido-2-methylpropansulfonsäure bzw. Salze davon sowie 25 bis 35 Gew. % mindestens eines kationischen, Ammoniumionen aufweisenden Monomers, bevorzugt Salze von 3-Trimethylammoniumpropyl(meth)acrylamiden und 2-Trimethylammoniumethyl(meth)acrylaten.

### Verwendete Tenside (B)

Die erfindungsgemäß verwendete, wässrige Formulierung umfasst weiterhin eines oder mehrere anionische und/oder nichtionische Tenside ausgewählt aus der Gruppe der Tenside (Ba), (Bb) und (Bc).

### Tenside (Ba)

Bei den Tensiden (Ba) handelt es sich um nichtionische Tenside der allgemeinen Formel R¹⁵-O-(R¹⁶O)ₐ-H (VII).

Hierbei steht R¹⁵ für einen gesättigten, ungesättigten oder aromatischen, geradkettigen, cyclischen und/oder verzweigten Kohlenwasserstoffrest mit 10 bis 36 Kohlenstoffatomen, bevorzugt 12 bis 36 Kohlenstoffatomen und besonders bevorzugt 16 bis 36 Kohlenstoffatomen.

Bei den Resten R¹⁶O handelt es sich unabhängig voneinander um Alkylenoxygruppen mit 2 bis 4 Kohlenstoffatomen, beispielsweise 1,2-Ethylenoxygruppen -CH₂-CH₂-O-, 1,2-Propylenoxygruppen -CH₂-CH(CH₃)-O- oder 1,2-Butylenoxygruppen -CH₂-CH(C₂H₅)-O-, mit der Maßgabe, dass mindestens 50 mol %, bevorzugt mindestens 70 mol % der Reste R¹⁶O für eine 1,2-Ethylenoxygruppe stehen.

Die Zahl a steht hierbei für eine Zahl von 3 bis 100, bevorzugt 8 bis 80, besonders bevorzugt 10 bis 60 und ganz besonders bevorzugt 12 bis 40.

Sofern mehrere verschiedene Reste -R¹⁶O- vorhanden sind, können diese statistisch, alternierend oder blockweise angeordnet sein, wobei eine blockweise Anordnung bevorzugt ist. Bei einer blockweisen Anordnung ist es bevorzugt, dass sich an den R¹⁵-Rest zunächst Propylenoxy- und/oder Butylenoxygruppen anschließen und Ethylenoxygruppen einen terminalen Block bilden.

Tenside der allgemeinen Formel (VII) können in prinzipiell bekannter Art und Weise durch Alkoxylierung der entsprechenden Alkohole R¹⁵-OH mit den entsprechenden Alkylenoxiden, beispielsweise Ethylenoxid, Propylenoxid oder Butylenoxid erhalten werden. Dem Fachmann ist bekannt, dass die Alkoxylierung von Alkoholen statistisch erfolgt. Die genannte Zahl a ist also als Durchschnittswert zu verstehen.

Bevorzugte Tenside (VII) weisen die Formel R¹⁵-O-(CH₂CH₂O)_{b}H auf, wobei R¹⁵ für einen verzweigten aliphatischen Rest mit 12 bis 24 Kohlenstoffatomen, bevorzugt 12 bis 18 Kohlenstoffatomen handelt, insbesondere um den Rest eines Oxoalkohols.

### Tenside (Bb)

Bei den Tensiden (Bb) handelt es sind um anionische Tensiden der allgemeinen Formel R¹⁵-O-(R¹⁷O)_{b}-R¹⁸-Y (VIII).

In Formel (VIII) hat R¹⁵ die bereits definierte Bedeutung.

Bei den Resten R¹⁷O handelt es sich unabhängig voneinander Alkylenoxygruppen mit 2 bis 4 Kohlenstoffatomen, mit der Maßgabe, dass es sich bei mindestens 30 mol%, bevorzugt mindestens 50 mol % der Reste R¹⁷O für einen 1,2-Ethylengruppe und/oder eine 1,2-Propylengruppe stehen.

R¹⁸ in Fomel (VIII) steht für ein Einfachbindung oder eine zweiwertige Kohlenwasserstoffgruppe mit 1 bis 10 Kohlenstoffatomen, insbesondere eine zweiwertige aliphatische Kohlenwasserstoffgruppe mit 1 bis 10, bevorzugt 1 bis 4 Kohlenstoffatomen. Bevorzugt handelt es sich um eine Gruppe, ausgewählt aus der Gruppe von Methylengruppen -CH₂-, 1,2-Ethylengruppen - CH₂-CH₂-, 1,2-Propylengruppen -CH₂-CH(CH₃)- bzw. -CH(CH₃)-CH₂- oder 1,3-Propylengruppen -CH₂-CH₂-CH₂-.

b steht für eine Zahl von 1 bis 100, bevorzugt 2 bis 60, besonders bevorzugt 5 bis 30 und beispielsweise 8 bis 20.

Y steht für eine saure Gruppe oder ein Salz davon, ausgewählt aus der Gruppe von Sulfonatgruppen, Sulfatgruppen, Phosphonatgruppen, Phosphorsäuregruppen oder Carboxylgruppen. Sofern es sich um ein Salz handelt, kann es sich um Alkalimetallsalze, insbesondere Na-Salze oder Ammoniumsalze handeln. Bevorzugt handelt es sich um Sulfonat, Sulfat oder Carboxylgruppen.

Die Herstellung von Tensiden der allgemeinen Formel (VIII) ist dem Fachmann prinzipiell bekannt. In einem ersten Schritt können wie bereits beschreiben Alkohole der allgemeinen Formel R¹⁵OH alkoxyliert werden. Die erhaltenen, alkoxylierten Alkohole werden anschließend mit den sauren Gruppen Y modifiziert, wobei die Art der Verknüpfung R¹⁸ von der gewählten Methode zu Modifizierung abhängt. Im Falle einer Sulfatgruppe kann man beispielsweise auf die Umsetzung des alkoxylierten Alkohols mit Schwefelsäure, Chlorsulfonsäure oder Schwefeltrioxid im Fallfilmreaktor zurückgreifen. In diesem Falle handelt es sich bei R¹⁸ um eine Einfachbindung. Im Falle einer Sulfonatgruppe kann man beispielsweise auf die Umsetzung mit Propansulton (R¹⁸ = -CH₂-CH₂-CH₂-) oder Butansulton (R¹⁸ = --CH₂-CH₂-CH₂-CH₂-) oder mit Vinylsulfonsäure (R¹⁸ = -CH₂-CH₂-) bzw. deren Natriumsalz zurückgreifen. Im Falle einer Carboxylatgruppe kann man beispielsweise auf die Oxidation des Alkohols mit Sauerstoff und nachfolgender Neutralisierung bzw. die Umsetzung mit Chloressigsäurenatriumsalz zurückgreifen. Weitere Einzelheiten zur Modifizierung nichtionischer Tenside mit sauren Gruppen sind beispielsweise in der WO 2009/124922, Seite 21, Zeilen 9 bis 39, Seite 22, Zeilen 27 bis Zeile 23, Zeile 2 sowie Seite 23, Zeilen 30 bis 34 zu finden.

Bevorzugte Tenside (VIII) weisen die Formel R¹⁵-O-(R^{17O})_{b'}-SO₃M (VIIIa) auf, wobei in Formel (VIIIa) M für H oder ein Alkalimetall bzw. Ammoniumion steht, R¹⁷O für eine Propylenoxygruppe, b für eine Zahl von 6 bis 15 und b für einen linearen aliphatischen Kohlenwasserstoffrest mit 16 bis 18 Kohlenstoffatomen.

### Tenside (Bc)

Bei den Tensiden (Bc) handelt es sich um sternförmige, nichtionische Tenside der allgemeinen Formel R¹⁹[-(O-(CH-CH(R²⁰)-O)_{c}-(CH₂CH₂O)_{d}-(CH-CH(R²⁰)-O)ₑ-H)]_{f} (IX).

Hierbei steht f in Formel (IX) für eine Zahl von 3 bis 9, bevorzugt 3 bis 6 und besonders bevorzugt 3 oder 4.

R¹⁹ steht für einen f-wertigen Kohlenwasserstoffrest, insbesondere einen aliphatischen Kohlenwasserstoffrest mit 3 bis 15 Kohlenstoffatomen, bevorzugt 3 bis 10 Kohlenstoffatomen.

R²⁰ steht für einen aliphatischen Kohlenwasserstoffrest mit 1 bis 3 Kohlenstoffatomen, insbesondere 1 oder 2 Kohlenstoffatomen, d.h. bei den Einheiten -(CH-CH(R²⁰)-O)- handelt es sich bevorzugt um Prooxy- oder um Butoxyreste.

In der Formel (IX) steht c für eine Zahl von 0 bis 2, bevorzugt 0 bis 1. Weiterhin steht d für eine Zahl von 2 bis 50, bevorzugt 2 bis 30 und besonders bevorzugt 3 bis 20, und e steht für eine Zahl von 2 bis 50, bevorzugt 2 bis 30 und besonders bevorzugt 4 bis 35.

Die Tenside (Bc) umfassen also eine zentrale Kohlenstoffgruppe, welche mindestens 3 Polyalkoxygruppen als Seitengruppen aufweist. Die Gruppen -(CH-CH(R²⁰)-O)_{c}, -(CH₂CH₂O)_{d}- sowie -(CH-CH(R²⁰)-O)ₑ- sind dabei in der genannten Reihenfolge angeordnet. Sie weisen also eine Blockstruktur auf. Als terminale Gruppe fungiert eine Polyalkoxygruppe. Die Polyalkoxygruppen -(CH-CH(R²⁰)-O)_{c}- sind hierbei nur optional vorhanden.

Die Herstellung der Tenside (IX) kann in prinzipiell bekannter Art und Weise durch mehrstufige Alkoxylierung von mindestens dreiwertigen Alkoholen R(OH)_{'f} erfolgen, beispielsweise durch basenkatalysierte Alkoxylierung in Xylol. Geeignete, mindestens dreiwertige Alkohole umfassen beispielsweise Glycerin, Diglycerin, Triglycerin, Trimethylolethan, Trimethylolpropan, 1,2,4-Butantriol, Pentaerythrit, Bispentaerythrit oder Trispentaerythrit.

### Wässrige Formulierung

Die zur Ausführung des Verfahrens verwendete wässrige Formulierung umfasst neben Wasser mindestens das beschriebene hydrophob assoziierende Copolymer (A) sowie mindestens ein Tensid (B). Selbstverständlich können auch Gemische verschiedener hydrophob assoziierender Copolymere (B) sowie Gemische mehrerer Tenside (B) eingesetzt werden.

Die Formulierung kann in Süßwasser aber auch in Salzen enthaltendem Wasser angesetzt werden. Selbstverständlich kann es sich um Mischungen verschiedener Salze handeln. Beispielsweise kann Meerwasser zum Ansetzen der wässrigen Formulierung verwendet werden oder es kann gefördertes Formationswasser verwendet werden, welches auf diese Art und Weise wiederverwendet wird. Bei Förderplattformen im Meer wird die Formulierung in der Regel in Meerwasser angesetzt. Bei Fördereinrichtungen an Land kann das Polymer beispielsweise zunächst in Süßwasser gelöst und die erhaltene Lösung mit Formationswasser auf die gewünschte Einsatzkonzentration verdünnt werden.

Neben Wasser können auch geringe Mengen von mit Wasser mischbaren, organischen Lösemitteln, beispielsweise mit Wasser mischbaren Alkoholen wie vorhanden sein. Sofern überhaupt vorhanden, sollte deren Menge aber geringer sein als 20 Gew. % bezüglich der Summer aller verwendeten Lösemittel, bevorzugt geringer als 10 Gew. %, besonders bevorzugt geringer als 5 Gew. % und besonders bevorzugt sollte kein organisches Lösemittel zusätzlich verwendet werden.

Bei den Salzen kann es sich insbesondere um Alkalimetallsalze sowie Erdalkalimetallsalze handeln. Beispiele typischer Kationen umfassen Na⁺, K⁺, Mg²⁺ oder Ca²⁺ und Beispiele typischer Anionen umfassen Chlorid, Bromid, Hydrogencarbonat, Sulfat oder Borat.

Sofern die Formulierung Salze umfasst, sind in der Regel zumindest eines oder mehrere Alkalimetallionen, insbesondere zumindest Na⁺ vorhanden. Daneben können auch noch Erdalkalimetallionen vorhanden sein, wobei das Gewichtsverhältnis Alkalimetallionen / Erdalkalimetallionen in der Regel ≥ 2, bevorzugt ≥ 3 ist. Als Anionen sind in der Regel zumindest eines oder mehrere Halogenid-Ionen, insbesondere zumindest Cl⁻ vorhanden. In der Regel beträgt die Menge an Cl⁻ zumindest 50 Gew. %, bevorzugt mindestens 80 Gew. % bezüglich der Summe aller Anionen.

Die Gesamtmenge aller Salze in der wässrigen Formulierung kann bis zu 350 000 ppm (Gewichtsanteile), bezüglich der Summe aller Komponenten der Formulierung betragen. Sie sollte möglichst nicht mehr als 200 000 ppm betragen.

Die wässrige Formulierung kann selbstverständlich noch weitere Komponenten umfassen. Beispielsweise kann es sich um Zusätze von Basen, wie Alkalimetallhydroxide oder Natriumcarbonate handeln. Weitere Beispiele zusätzlicher Komponenten umfassen Komplexbildner, Biozide, Stabilisatoren oder Inhibitoren.

Die Formulierung kann bevorzugt hergestellt werden, indem man das Wasser vorlegt, die Komponenten nacheinander dem Wasser zugibt und miteinander vermischt. Das Copolymer (A) kann dem Wasser als Pulver zugesetzt werden.

Erfindungsgemäß beträgt die Konzentration der Copolymere (A) in der Formulierung 0,02 bis 2 Gew.-% bezüglich der Summe aller Komponenten der wässrigen Formulierung. Bevorzugt beträgt die Menge 0,05 bis 0,5 Gew. %, besonders bevorzugt 0,04 bis 0,2 Gew. % und beispielsweise ca. 0,1 Gew. %.

Die Menge der Tenside (B) in der Formulierung beträgt 0,005 bis 1 Gew. %, bevorzugt 0,05 bis 0,5 Gew. %. Die Menge kann vom Fachmann je nach dem gewünschten Einsatzzweck bemessen werden.

In geringen Mengen eingesetzt, können die Tenside (B) vor allem mit Zweck eingesetzt werden, die Viskosität der Formulierung zu erhöhen. Für diesen Zweck haben sich Tensidmengen von 0,005 Gew. % bis 0,05 Gew. %, bevorzugt 0,05 bis 0,025 Gew. % bewährt.

In größeren Mengen eingesetzt, können Tenside in prinzipiell bekannter Art und Weise die zusätzliche Entölung der Lagerstätte durch die Wirkung der Tenside zu fördern. Für diesen Zweck haben sich Mengen von 0,05 Gew. % bis 1 Gew. %, bevorzugt 0,075 bis 0,5 Gew. % bewährt und besonders bevorzugt 0,1 bis 0,5 Gew. % bewährt. Für den Fachmann ist klar, dass die Übergänge zwischen beiden Phänomenen fließend sind und dass auch beide Effekte gleichzeitig auftreten können.

Das Gewichtsverhältnis der Copolymere zu den Tensiden (A) / (B) beträgt 2:1 bis 20:1, bevorzugt 2:1 bis 5:1.

Die Konzentration des Copolymers wird so festgelegt, dass die wässrige Formulierung die gewünschte Viskosität für den Einsatzzweck aufweist. Die Viskosität der Formulierung sollte mindestens 5 mPas (gemessen bei 25°C und einer Scherrate von 7 s⁻¹) betragen, bevorzugt mindestens 10 mPas.

Besonders bevorzugte Copolymere (A) und Tenside (B) für die wässrige Formulierung und zur Ausführung des Verfahrens wurden bereits oben genannt.

### Verfahren zur Erdölförderung

Zur Ausführung des erfindungsgemäßen Verfahrens werden in die Erdöllagerstätte mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen.

Durch die mindestens eine Injektionsbohrung wird eine wässrige Formulierung des beschriebenen Copolymers in die Erdöllagerstätte injiziert und der Lagerstätte durch mindestens eine Produktionsbohrung Erdöl entnommen. Mit dem Begriff "Erdöl" ist in diesem Zusammenhang selbstverständlich nicht nur phasenreines Öl gemeint, sondern der Begriff umfasst auch die üblichen Rohöl-Wasser-Emulsionen. Durch den durch die eingepresste Formulierung fließt das Erdöl in Richtung der Produktionsbohrung und wird über die Produktionsbohrung gefördert.

In einer bevorzugten Ausführungsform des Verfahrens wird das erfindungsgemäße Verfahren im Anschluss an Wasserfluten der Lagerstätte durchgeführt. Hierzu wird durch die besagten Injektionsbohrungen zunächst nur Wasser bzw. salzhaltiges Wasser in die Erdölformation injiziert und somit Erdöl gefördert. Dies kann solange erfolgen, bis eine signifikante Verwässerung der Produktion beobachtet wird. Unter "Verwässerung" der Produktion versteht der Fachmann, dass der Anteil des Wassers im geförderten Öl-Wasser- Gemisch mit zunehmender Dauer des Wasserflutens zunimmt. Die Ursache hierfür ist, dass Wasser mit zunehmender Dauer des Wasserflutens bevorzugt durch bereits entölte Bereiche der Erdöllagerstätte mit niedrigem Fließwiderstand strömt.

In einer weiteren Ausführungsform der Erfindung kann man die Förderung nach der Injektion der wässrigen Formulierung aus den Komponenten (A) und (B) mit Wasserfluten fortsetzen.

Das erfindungsgemäße Verfahren kann prinzipiell auf Erdöllagerstätten beliebiger Temperatur angewandt werden. Typische Lagerstättentemperaturen liegen im Bereich von 20°C bis 150°C. Insbesondere kann die Lagerstättentemperatur 35°C bis 120°C, bevorzugt 40°C bis 90°C, besonders bevorzugt 45°C bis 75°C und beispielsweise 50°C bis 70°C betragen.

Für den Fachmann ist klar, dass eine Erdöllagerstätte auch eine gewisse Temperaturverteilung aufweisen kann. Die genannte Lagerstättentemperatur bezieht sich auf den Bereich der Lagerstätte zwischen den Injektions- und Produktionsbohrungen, der vom Polymerfluten erfasst wird. Methoden zur Ermittlung der Temperaturverteilung einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen vorgenommen, wobei man bei den Simulationsrechnungen u.a. in die Formation eingebrachte Wärmemengen sowie die aus der Formation abgeführte Wärmemengen berücksichtigt.

Das erfindungsgemäße Verfahren kann insbesondere bei Erdöllagerstätten mit einer durchschnittlichen Permeabilität von 10 mD bis 4 D, bevorzugt 100 mD bis 2 D und besonders bevorzugt 200 mD bis 1 D angewandt werden. Die Permeabilität einer Erdölformation wird vom Fachmann in der Einheit "Darcy" (abgekürzt "D" bzw. "mD" für "Millidarcy") angegeben und kann aus der Fließgeschwindigkeit einer flüssigen Phase in der Erdölformation in Abhängigkeit der angelegten Druckdifferenz bestimmt werden. Die Fließgeschwindigkeit kann in Kernflutversuchen mit der Formation entnommenen Bohrkernen bestimmt werden. Einzelheiten hierzu finden sich beispielsweise in K. Weggen, G. Pusch, H. Rischmüller in "Oil and Gas", Seiten 37 ff., Ulmann's Encyclopedia of Industrial Chemistry, Online-Ausgabe, Wiley-VCH, Weinheim 2010. Für den Fachmann ist klar, dass die Permeabilität in einer Erdöllagerstätte nicht homogen sein muss, und es sich bei der Permeabilität um eine durchschnittliche Permeabilität handelt.

Das Injizieren der erfindungsgemäßen, wässrigen Formulierung kann mittels üblicher Vorrichtungen vorgenommen werden. Die Formulierung kann mittels üblicher Pumpen in eine oder mehrere Injektionsbohrungen injiziert werden. Die Injektionsbohrungen sind üblicherweise mit einzementierten Stahlrohren ausgekleidet, und die Stahlrohre sind an der gewünschten Stelle perforiert. Die Formulierung tritt durch die Perforation aus der Injektionsbohrung in die Erdölformation ein. Über den mittels der Pumpen angelegten Druck wird in prinzipiell bekannter Art und Weise die Strömungsgeschwindigkeit der Formulierung und damit auch die Scherbelastung festgelegt, mit der die wässrige Formulierung in die Formation eintritt. Die Scherbelastung beim Eintritt in die Formation kann vom Fachmann in prinzipiell bekannter Art und Weise auf Basis des Gesetz' von Hagen-Poiseuille unter Verwendung der beim Eintritt in die Formation durchströmten Fläche, dem mittleren Porenradius und dem Volumenstrom errechnet werden. Die durchschnittliche Porosität der Formation kann in prinzipiell bekannter Art und Weise durch Messungen an Bohrkernen ermittelt werden. Die Scherbelastung ist naturgemäß umso größer, je größer der in die Formation injizierte Volumenstrom an wässriger Copolymerformulierung ist.

Die Geschwindigkeit der Injektion kann vom Fachmann je nach den Verhältnissen in der Formation festgelegt werden. Bevorzugt beträgt die Scherrate beim Eintritt der wässrigen Polymerformulierung in die Formation mindestens 30000 s⁻¹, bevorzugt mindestens 60000 s⁻¹ und besonders bevorzugt mindestens 90000 s⁻¹.

Mittels der verwendeten wässrigen Formulierung kann die Erdölausbeute wie beim klassischen Polymerfluten gesteigert werden. Durch die an die Viskosität der Ölphase angepassten Viskosität der Wasserphase wird vermieden oder zumindest verzögert, dass die wässrige Phase zu Produktionsbohrung durchbricht und die Produktion verwässert. Die Front der von der Injektionsbohrung her drückenden wässrigen Phase wird gleichmäßiger, das sogenannte "Fingering" wird vermieden, und somit wird die Ölausbeute gesteigert. Mittels der erfindungsgemäß verwendeten wässrigen Formulierung aus Copolymer (A) und Tensiden (B) können aber noch zusätzliche Effekte gegenüber der Verwendung einer nur das Copolymer (A) umfassenden Formulierung erreicht werden. Zum einen kann die Viskosität der Formulierung durch den Tensidzusatz erhöht werden, und außerdem kann durch den Einsatz des Tensids zusätzliches Erdöl in der Formation mobilisiert und gefördert werden.

Die folgenden Beispiele sollen die Erfindung näher illustrieren:

### Verwendete Monomere (Aa)

### Monomer M1

### Hydroxybutylvinyletheralkoxylat mit 22 EO-Einheiten und 12 PeO-Einheiten

H₂C=CH-O-(CH₂)₄-O-(-CH₂-CH₂-O-)₂₂-(-CH₂-CH(C₃H₇)-O-)₁₂-H

In einem 1 L Rührautoklaven aus Edelstahl werden 44,1 g Hydroxybutylvinylether vorgelegt. Anschließend werden 3,12 g KOMe (32 %ig in MeOH) dosiert und das Methanol bei 80 °C und ca. 30 mbar abgezogen. Anschließend wird auf 140 °C aufgeheizt, der Reaktor mit Stickstoff gespült und ein Stickstoff-Vordruck von 1,0 bar eingestellt. Anschließend werden 368 g EO innerhalb von ca. 3 h dosiert. Nach einer halbstündigen Nachreaktion bei 140 °C wird der Reaktor auf 125 °C abgekühlt und es werden innerhalb von 3,5 h insgesamt 392 g Pentenoxid eindosiert. Die Nachreaktion läuft über Nacht.

Das Produkt hat eine OH-Zahl von 31,9 mg KOH/g (Theorie: 26,5 mg KOH/g). Die OH-Zahl wird mittels der ESA-Methode ermittelt.

### Herstellung der Copolymere (A)

### Herstellung eines Copolymers aus 2 Gew. % Monomer M1, 50 Gew. % Acrylamid und 48 Gew. % 2-Acrylamido-2-methylpropansulfonsäure

In einem Plastikeimer mit Magnetrührer, pH-Meter und Thermometer werden 121,2 g einer 50 %-igen wässrigen Lösung von NaATBS (2-Acrylamido-2-methylpropansulfonsäure, Na-Salz) vorgelegt und anschließend nacheinander 155 g destilliertes Wasser, 0,6 g eines Entschäumers (Surfynol® DF-58), 0,2 g eines Silikonentschäumers (Baysilon® EN), 2,3 g Monomer M1, 114,4 g einer 50 %-igen wässrigen Lösung von Acrylamid, 1,2 g Pentanatriumdiethylentriaminpentaacetat (Komplexbildner, als 5%-ige wässrige Lösung) und 2,4 g eines nichtionischen Tensids (Nonylphenol, alkoxyliert mit 10 Einheiten Ethylenoxid) zugegeben.

Nach Einstellen des pH-Wertes mit einer 20%-igen bzw. 2%-igen Schwefelsäure-Lösung auf einen Wert von 6 und Zugabe des restlichen Wassers wird die Monomerlösung auf die Starttemperatur von 5°C eingestellt. Die Gesamtmenge des Wassers wird so bemessen, dass -nach der Polymerisation- eine Feststoffkonzentration von ca. 30 bis 36 Gew. % erreicht wird. Die Lösung wird in eine Thermoskanne umgefüllt, ein Thermofühler für die Temperaturaufzeichnung angebracht und 30 Minuten mit Stickstoff gespült. Die Polymerisation wird anschließend durch Zugabe von 1,6 ml einer 10%-igen wässrigen Lösung eines wasserlöslichen, kationischen Azoinitiators 2,2'-Azo-bis-(2-amidinopropan)-dihydrochlorid (Wako V-50), 0,12 ml einer 1 %-igen wässrigen Lösung tert.-Butylhydroperoxid sowie 0,24 ml einer 1%igen Natriumsulfit-Lösung gestartet. Nach Zugabe der Initiatoren steigt die Temperatur innerhalb von 15 bis 30 min auf ca. 80°C. Nach 30 min wird das Reaktionsgefäß zur Vervollständigung der Polymerisation für ca. 2 h in einen Trockenschrank von ca. 80°C gestellt. Die Gesamtdauer der Polymerisation beträgt ca. 2 h bis 2,5 h.

Es wird ein Gel-Block erhalten, der nach Beendigung der Polymerisation mit Hilfe eines Fleischwolfs zerkleinert wird. Das erhaltene Gel-Granulat wird in einem Wirbelschichttrockner bei 55 °C für zwei Stunden getrocknet. Man erhält dabei ein weißes, hartes Granulat, welches mittels Zentrifugalmühle in einen pulverförmigen Zustand übergeführt wird. Man erhält ein Copolymer mit einem gewichtsmittleren Molekulargewicht von ca. 1^{∗}10⁶ g/mol bis 30^{∗}10⁶ g/mol.

### Verwendete Tenside:

### Tensid 1:

### C16C18-7PO-Sulfat:

Anionisches Tensid der Formel: R-O-(CH₂-CH(CH₃)-O)₇-SO₃H auf Basis von C₁₆/C₁₈-Fettalkoholen (d.h. bei R handelt es sich um lineare aliphatische C₁₆- bis C₁₈-Kohlenwasserstoffreste).

### Tensid 2:

### Sternförmiges Tensid der Formel

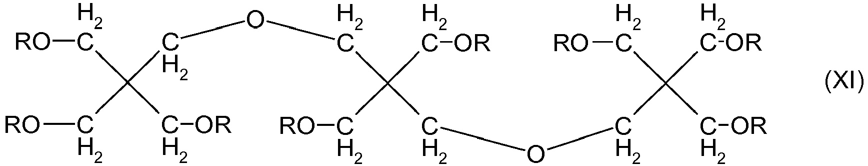

R = -(CH-CH(C₂H₅)-O)_{0,125}-(CH₂CH₂O)₃-(CH-CH(CH₃)-O)_{5,25}-H

Es ist erhältlich durch stufenweise Alkoxylierung von 1 mol Trispentaerythrit (ein 8-wertiger Alkohol, erhältlich durch Kondensation von 3 mol Pentaerythrit) mit 1 mol Butylenoxid, 24 mol Ethylenoxid und 42 mol Propylenoxid unter Verwendung eines basischen Katalysators in Xylol als Lösemittel.

### Tensid 3 (nicht erfindungsgemäß):

Kationisches Tensid: Dodecyltrimethylammoniumbromid

### Verwendete salzhaltige Medien:

Für die Versuche wurden die folgenden Salzlösungen eingesetzt.

### Salzlösung 1: Lagerstättenwasser (synthetisch)

Gesamtsalinität: 77529 mg/l
Na⁺ 25091 mg/l, K⁺ 177 mg/l, Mg²⁺ 979 mg/l, Ca²⁺ 2962 mg/l, Ba²⁺ 61 mg/l, Sr²⁺ 187 mg/l, Mn 0,9 mg/l,
Cl⁻ 47934 mg/l, HCO₃⁻ 134 mg/l
Verhältnis Alkalimetallionen / Erdalkalimetallionen: 6,0

### Salzlösung 2: Lagerstättenwasser (synthetisch):

Gesamtsalinität: 185 548 mg/l
Na⁺ 52079 mg/l, Mg²⁺ 2681 mg/l, Ca²⁺ 15383 mg/l, Cl⁻ 115105 mg/l, Borat 117 mg/l, SO₄²⁻ 183 mg/l.
Verhältnis Alkalimetallionen / Erdalkalimetallionen: 2,9; Lagerstättenwaser mit hohem Ca²⁺- Anteil

### Salzlösung 3: Meerwasser (synthetisch):

Gesamtsalinität: ca. 35000 mg/l
Na⁺ 10692 mg/l, K⁺ 420 mg/l, Mg²⁺ 1295 mg/l, Ca²⁺ 422 mg/l, Cl⁻ 19218 mg/l, HCO₃⁻ 145 mg/l, SO₄²⁻ 2697 mg/l
Verhältnis Alkalimetallionen / Erdalkalimetallionen: 6,2

Es wurden die folgenden Versuche durchgeführt:

### Beispiel 1:

Eine Lösung von 2000 ppm des Coplymers (A) in Salzlösung 1 wurde einmal ohne Zusatz und einmal mit Zusatz von 500 ppm Tensid 1 (C16C18-7PO-Sulfat) rheologisch bei 25 °C untersucht:

| | |
|---|---|
| Viskosität ohne Tensidzusatz: | 50 mPas |
| Viskosität mit Tensidzusatz: | 100 mPas |

Die Messung erfolgte mit einem Brookfield LVDVII+ Pro Ultra bei 7,34 s⁻¹ bei 25 °C.

### Beispiel 2:

Eine Lösung von 2000 ppm des Polymers aus Herstellungsbeispiel 1 in Salzlösung 2 wurde einmal ohne Zusatz und einmal mit Zusatz von 500 ppm Tensid 2 rheologisch bei 60 °C untersucht:

| | |
|---|---|
| Viskosität ohne Tensidzusatz: | 29 mPas |
| Viskosität mit Tensidzusatz: | 69 mPas |

Die Messung erfolgte mit einem Haake RS 80 Rheometer bei 7 s⁻¹ bei 60 °C.

### Vergleichsbeispiel 1:

Eine Lösung von 1300 ppm des Polymers aus Herstellungsbeispiel 1 in Salzlösung 3 wurde einmal ohne Zusatz und einmal mit Zusatz von 500 ppm Tensid 3 (Dodecyltrimethylammoniumbromid) rheologisch bei 60 °C untersucht:

| | |
|---|---|
| Viskosität ohne Tensidzusatz: | 15 mPas |
| Viskosität mit Tensidzusatz: | < 3 mPas |

Die Messung erfolgte mit einem Haake RS 80 Rheometer bei 7 s⁻¹ bei 60 °C.

Die Versuche zeigen, dass bei den erfindungsgemäßen Formulierungen die Viskosität der erhaltenen wässrigen Formulierung durch den Zusatz des Tensids deutlich zunimmt, während bei Verwendung des nicht erfindungsgemäßen, kationischen Tensids die Viskosität der erhaltenen Formulierung deutlich abnimmt.

## Patentansprüche

1. Verfahren zur Erdölförderung, bei dem man eine wässrige Formulierung umfassend mindestens ein wasserlösliches, hydrophob assoziierendes Copolymer (A) sowie mindestens ein Tensid (B) durch mindestens eine Injektionsbohrung in eine Erdöllagerstätte einpresst und der Lagerstätte durch mindestens eine Produktionsbohrung Rohöl entnimmt, **dadurch gekennzeichnet, dass**
(A) das wasserlösliche, hydrophob assoziierende Copolymer
(Aa) 0,1 bis 15 Gew.-% mindestens eines monoethylenisch ungesättigten Monomers (Aa) ausgewählt aus der Gruppe von
H₂C=C(R¹)-R²-O-(-CH₂-CH(R³)-O-)ₖ-(-CH₂-CH(R⁴)-O-)ₗ-R⁵ (I),
H₂C=C(R¹)-O-(-CH₂-CH(R³)-O-)ₖ-R⁶ (II),
H₂C=C(R¹)-(C=O)-O-(⁻CH₂-CH(R³)-O-)ₖ-R⁶ (III),
umfasst, wobei die Einheiten -(-CH₂-CH(R³)-O-)ₖ und -(-CH₂-CH(R⁴)-O-)ₗ in Blockstruktur in der in Formel (I) dargestellten Reihenfolge angeordnet sind und die Reste und Indices die folgende Bedeutung haben:
k: eine Zahl von 10 bis 150,
l: eine Zahl von 5 bis 25,
R¹: H oder Methyl,
R²: eine Einfachbindung oder eine zweiwertige, verknüpfende Gruppe, ausgewählt aus der Gruppe von -(CₙH₂ₙ)-[R^{2a}], -O-(C_{n'}H_{2n'})-[R^{2b}] und-C(O)-O-(C_{n"}H_{2n"})-[R^{2c}], wobei n, n' und n" jeweils für eine natürliche Zahl von 1 bis 6 stehen,
R³: unabhängig voneinander H, Methyl oder Ethyl, mit der Maßgabe, dass es sich bei mindestens 50 mol % der Reste R² um H handelt,
R⁴: unabhängig voneinander ein Kohlenwasserstoffrest mit mindestens 2 Kohlenstoffatomen oder eine Ethergruppe der allgemeinen Formel-CH₂-O-R^{4'}, wobei R^{4'} für einen Kohlenwasserstoffrest mit mindestens 2 Kohlenstoffatomen steht,
R⁵: H oder ein Kohlenwasserstoffrest mit 1 bis 30 C-Atomen,
R⁶: ein aliphatischer und/oder aromatischer, geradkettiger oder verzweigter Kohlenwasserstoffrest mit 8 bis 40 Kohlenstoffatomen,
sowie weiterhin
(Ab) 85 bis 99,9 Gew. % mindestens zweier, davon verschiedener, monoethylenisch ungesättigter, hydrophiler Monomere (Ab) umfasst, wobei es sich bei den Monomeren (Ab) um
(Ab1) mindestens ein neutrales, monoethylenisch ungesättigtes, hydrophiles Monomer (b1), ausgewählt aus der Gruppe von (Meth)acrylamid, N-Methyl(meth)acrylamid, N,N'-Dimethyl(meth)acrylamid oder N-Methylol(meth)acrylamid, sowie um
(Ab2) mindestens ein anionisches, monoethylenisch ungesättigtes hydrophiles Monomer (Ab2), welches mindestens eine saure Gruppe ausgewählt aus der Gruppe von -COOH, -SO₃H oder -PO₃H₂ bzw. deren Salze handelt,
wobei die Mengenangaben jeweils auf die Gesamtmenge aller Monomere im Copolymer bezogen sind und das Copolymer ein gewichtsmittleres Molekulargewicht M_{W} von 1^{∗}10⁶ g/mol bis 30^{∗}10⁶ g/mol aufweist, und dass
(B) es sich bei dem mindestens einen Tensid um ein nichtionisches und/oder anionisches Tensid handelt, welches ausgewählt wird aus der Gruppe von
(Ba) nichtionischen Tensiden der allgemeinen Formel
R¹⁵-O-(R¹⁶O)ₐ-H (VII),
wobei die Reste die folgende Bedeutung haben:
R¹⁵: ein C₁₀- bis C₃₆-Kohlenwasserstoffrest,
R¹⁶O: unabhängig voneinander eine Alkylenoxygruppen mit 2 bis 4 Kohlenstoffatomen, mit der Maßgabe, dass mindestens 50 mol% der Reste R¹⁶O für eine 1,2-Ethylenoxygruppe stehen,
a: eine Zahl von 3 bis 100,
(Bb) anionischen Tensiden der allgemeinen Formel
R¹⁵-O-(R¹⁷O)_{b}-R¹⁸-Y (VIII),
wobei die Reste die folgende Bedeutung haben:
R¹⁵: wie bereits definiert,
R¹⁷O: unabhängig voneinander Alkylenoxygruppen mit 2 bis 4 Kohlenstoffatomen, mit der Maßgabe, dass mindestens 30 mol% der Reste R¹⁷ für eine 1,2-Ethylenoxygruppe und/oder eine 1,2-Propylenoxygruppe stehen,
R¹⁸: eine Einfachbindung oder eine zweiwertige Kohlenwasserstoffgruppe mit 1 bis 10 Kohlenstoffatomen,
b: eine Zahl von 1 bis 100, und
Y: eine saure Gruppe oder ein Salz davon, ausgewählt aus der Gruppe von Sulfonatgruppen, Sulfatgruppen, Phosphonatgruppen, Phosphorsäuregruppen oder Carboxylgruppen,
(Bc) Sternförmigen, nichtionischen Tensiden der allgemeinen Formel
R¹⁹[(O-(CH-CH(R²⁰)-O)_{c}-(CH₂CH₂O)_{d}-(CH-CH(R²⁰)-O)ₑ-H]_{f} (IX),
wobei die Reste die folgende Bedeutung haben:
f: eine Zahl von 3 bis 9,
R¹⁹: ein f-wertiger Kohlenwasserstoffrest,
R²⁰: ein aliphatischer Kohlenwasserstoffrest mit 1 bis 3 Kohlenstoffatomen,
c: eine Zahl von 0 bis 2,
d: eine Zahl von 2 bis 50,
e: eine Zahl von 2 bis 50,
und wobei
▪ die Menge der Copolymere (A) in der Formulierung 0,02 bis 2 Gew. %,
▪ die Menge der Tenside (B) 0,005 bis 1,0 Gew. %, und
▪ die Viskosität der Formulierung mindestens 5 mPas (gemessen bei 25°C) beträgt,
▪ das Gewichtsverhältnis der Copolymere zu den Tensiden (A) / (B) 2:1 bis 20:1 beträgt.

2. Verfahren gemäß Anspruch 1, **dadurch gekennzeichnet, dass** man in einem der Injektion der beschriebenen wässrigen Formulierung vorangehenden Schritt Wasser in die Erdölformation injiziert.

3. Verfahren gemäß Anspruch 1 oder 2, **dadurch gekennzeichnet, dass** es sich bei dem Monomer (Aa) um mindestens eines der Formel (I) handelt, und wobei
• R⁴ für einen Kohlenwasserstoffrest mit 3 bis 8 Kohlenstoffatomen,
• k für eine Zahl von 12 bis 100, und
• R⁵ für H, Methyl oder Ethyl steht.

4. Verfahren gemäß Anspruch 3, **dadurch gekennzeichnet, dass** es sich bei
• R⁴ um einen n-Propylrest handelt,
• k für eine Zahl von 15 bis 80, und
• R⁵ für H steht.

5. Verfahren gemäß einem der Ansprüche 1 bis 4, **dadurch gekennzeichnet, dass** die neutralen Monomere (b1) in einer Menge von 30 bis 95 Gew. % und die anionischen Monomere (Ab2) in einer Menge von 4,9 bis 69,9 Gew. % eingesetzt werden, wobei die Mengen jeweils auf die Gesamtmenge aller eingesetzten Monomere bezogen ist.

6. Verfahren gemäß einem der Ansprüche 1 bis 4, **dadurch gekennzeichnet, dass** das Copolymer weiterhin mindestens ein monoethylenisch ungesättigtes, kationisches, Ammoniumionen aufweisendes Monomer (b3) umfasst.

7. Verfahren gemäß Anspruch 6, **dadurch gekennzeichnet dass** es sich bei dem kationischen Monomer (b3) um Salze von 3-Trimethylammoniumpropyl(meth)acrylamiden und 2-Trimethylammoniumethyl(meth)acrylaten handelt.

8. Verfahren gemäß Anspruch 6 oder 7, **dadurch gekennzeichnet, dass** die neutralen Monomere (b1) in einer Menge von 30 bis 95 Gew. % und die anionischen (Ab2) und kationischen Monomere (b3) zusammen in einer Menge von 4,9 bis 69,9 Gew. %, mit der Maßgabe, dass das molare Verhältnis (Ab2) / (b3) 0,7 bis 1,3 beträgt, und wobei die Mengen jeweils auf die Gesamtmenge aller eingesetzten Monomere bezogen ist.

9. Verfahren gemäß einem der Ansprüche 1 bis 8, **dadurch gekennzeichnet, dass** man die Herstellung des hydrophob assoziierenden Copolymers (A) in Gegenwart einer nicht polymerisierbaren, oberflächenaktiven Verbindung vornimmt.

10. Wässrige Formulierung für die Erdölförderung umfassend mindestens ein wasserlösliches, hydrophob assoziierendes Copolymer (A) sowie mindestens ein Tensid (B) **dadurch gekennzeichnet, dass** das wasserlösliche, hydrophob assoziierende Copolymer
(Aa) 0,1 bis 15 Gew.-% mindestens eines monoethylenisch ungesättigten Monomers (Aa) ausgewählt aus der Gruppe von
H₂C=C(R¹)-R²-O-(-CH₂-CH(R³)-O-)ₖ-(-CH₂-CH(R⁴)-O-)ₗ-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
umfasst, wobei die Einheiten -(-CH₂-CH(R³)-O-)ₖ und -(-CH₂-CH(R⁴)-O-)ₗ in Blockstruktur in der in Formel (I) dargestellten Reihenfolge angeordnet sind und die Reste und Indices die folgende Bedeutung haben:
k: eine Zahl von 10 bis 150,
l: eine Zahl von 5 bis 25,
R¹: H oder Methyl,
R²: eine Einfachbindung oder eine zweiwertige, verknüpfende Gruppe, ausgewählt aus der Gruppe von -(CₙH₂ₙ)-[R^{2a}], -O-(C_{n'}H_{2n'})-[R^{2b}] und-C(O)-O-(C_{n"}H_{2n"})-[R^{2c}-], wobei n, n' und n" jeweils für eine natürliche Zahl von 1 bis 6 stehen,
R³: unabhängig voneinander H, Methyl oder Ethyl, mit der Maßgabe, dass es sich bei mindestens 50 mol % der Reste R² um H handelt,
R⁴: unabhängig voneinander ein Kohlenwasserstoffrest mit mindestens 2 Kohlenstoffatomen oder eine Ethergruppe der allgemeinen Formel -CH₂-O-R^{4'}, wobei R^{4'} für einen Kohlenwasserstoffrest mit mindestens 2 Kohlenstoffatomen steht,
R⁵: H oder ein Kohlenwasserstoffrest mit 1 bis 30 C-Atomen,
R⁶: ein aliphatischer und/oder aromatischer, geradkettiger oder verzweigter Kohlenwasserstoffrest mit 8 bis 40 Kohlenstoffatomen,
sowie weiterhin
(Ab) 85 bis 99,9 Gew. % mindestens zweier, von (Aa) verschiedener, monoethylenisch ungesättigter, hydrophiler Monomere (Ab) umfasst, wobei es sich bei den Monomeren (Ab) um
(Ab1) mindestens ein neutrales, monoethylenisch ungesättigtes, hydrophiles Monomer (b1), ausgewählt aus der Gruppe von (Meth)acrylamid, N-Methyl(meth)acrylamid, N,N'-Dimethyl(meth)acrylamid oder N-Methylol(meth)acrylamid, sowie um
(Ab2) mindestens ein anionisches, monoethylenisch ungesättigtes, hydrophiles Monomer (Ab2), welches mindestens eine saure Gruppe ausgewählt aus der Gruppe von -COOH, -SO₃H oder -PO₃H₂ bzw. deren Salze handelt,
wobei die Mengenangaben jeweils auf die Gesamtmenge aller Monomere im Copolymer bezogen sind und das Copolymer ein gewichtsmittleres Molekulargewicht Mw von 1^{∗}10⁶ g/mol bis 30^{∗}10⁶ g/mol aufweist,
und dass
(B) es sich bei dem mindestens einen Tensid um ein nichtionisches und/oder anionisches Tensid handelt, welches ausgewählt wird aus der Gruppe von
(Ba) nichtionischen Tensiden der allgemeinen Formel
R¹⁵-O-(R¹⁶O)ₐ-H (VII),
wobei die Reste die folgende Bedeutung haben:
R¹⁵: ein C₁₀- bis C₃₆-Kohlenwasserstoffrest,
R¹⁶O: unabhängig voneinander Alkylenoxygruppen mit 2 bis 4 Kohlenstoffatomen, mit der Maßgabe, dass mindestens 50 mol% der Reste R¹⁶ für einen 1,2-Ethylenoxygruppe stehen,
a: eine Zahl von 3 bis 100,
(Bb) anionischen Tensiden der allgemeinen Formel
R¹⁵-O-(R¹⁷O)_{b}-R¹⁸-Y (VIII),
wobei die Reste die folgende Bedeutung haben:
R¹⁵: wie bereits definiert,
R¹⁷O: unabhängig voneinander eine Alkylenoxygruppen mit 2 bis 4 Kohlenstoffatomen, mit der Maßgabe, dass mindestens 30 mol% der Reste R¹⁷ für einen 1,2-Ethylenoxygruppe und/oder eine 1,2-Propylenoxygruppe stehen,
R¹⁸: ein Einfachbindung oder eine zweiwertige Kohlenwasserstoffgruppe mit 1 bis 10 Kohlenstoffatomen,
b: eine Zahl von 1 bis 100, und
Y: eine saure Gruppe oder ein Salz davon, ausgewählt aus der Gruppe von Sulfonatgruppen, Sulfatgruppen, Phosphonatgruppen, Phosphorsäuregruppen oder Carboxylgruppen,
(Bc): sternförmigen, nichtionischen Tensiden der allgemeinen Formel
R¹⁹[(O-(CH-CH(R²⁰)-O)_{c}-(CH₂CH₂O)_{d}-(CH-CH(R²⁰)-O)ₑ-H]_{f} (IX),
wobei die Reste die folgende Bedeutung haben:
f: eine Zahl von 3 bis 9,
R¹⁹: ein f-wertiger Kohlenwasserstoffrest,
R²⁰: ein aliphatischer Kohlenwasserstoffrest mit 1 bis 3 Kohlenstoffatomen,
c: eine Zahl von 0 bis 2,
d: eine Zahl von 2 bis 50,
e: eine Zahl von 2 bis 50,
und wobei
▪ die Menge der Copolymere (A) in der Formulierung 0,02 bis 2 Gew. %,
▪ die Menge der Tenside (B) 0,05 bis 0,5 Gew. %, und
▪ die Viskosität der Formulierung mindestens 5 mPas (gemessen bei 25°C) beträgt,
▪ das Gewichtsverhältnis der Copolymere zu den Tensiden (A) / (B) 2:1 bis 20:1 beträgt.

11. Wässrige Formulierung gemäß Anspruch 10, **dadurch gekennzeichnet, dass** es sich bei dem Monomer (Aa) um mindestens eines der Formel (I) handelt, und wobei
• R⁴ für einen Kohlenwasserstoffrest mit 3 bis 10 Kohlenstoffatomen,
• k für eine Zahl von 12 bis 100, und
• R⁵ für H, Methyl oder Ethyl steht.

12. Wässrige Formulierung gemäß Anspruch 11, **dadurch gekennzeichnet, dass** es sich bei
• R⁴ um einen n-Propylrest handelt,
• k für eine Zahl von 15 bis 80, und
• R⁵ für H steht.

## Claims

1. A process for mineral oil production, in which an aqueous formulation comprising at least one water-soluble, hydrophobically associating copolymer (A) and at least one surfactant (B) is injected through at least one injection well into a mineral oil deposit, and crude oil is withdrawn from the deposit through at least one production well, wherein
(A) the water-soluble, hydrophobically associating copolymer comprises
(Aa) 0.1 to 15% by weight of at least one monoethylenically unsaturated monomer (Aa), selected from the group of
H₂C=C(R¹)-R²-O-(-CH₂-CH(R³)-O-)ₖ-(-CH₂-CH(R⁴)-O-)₁-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
where the - (-CH₂-CH(R³)-O-)ₖ and -(-CH₂-CH(R⁴)-O-)₁ units are arranged in block structure in the sequence shown in formula (I) and the radicals and indices are each defined as follows:
k: a number from 10 to 150,
l: a number from 5 to 25,
R¹: H or methyl,
R²: a single bond or a divalent linking group selected from the group of -(CₙH₂ₙ)-[R^{2a}], -O-(C_{n'}H_{2n'})-[R^{2b}] and -C(O)-O-(C_{n"}H_{2n"})-[R^{2c}], where n, n' and n" are each natural numbers from 1 to 6,
R³: each independently H, methyl or ethyl, with the proviso that at least 50 mol% of the R² radicals are H,
R⁴: each independently a hydrocarbyl radical having at least 2 carbon atoms or an ether group of the general formula -CH₂-O-R^{4'}, where R^{4'} is a hydrocarbyl radical having at least 2 carbon atoms,
R⁵: H or a hydrocarbyl radical having 1 to 30 carbon atoms,
R⁶: an aliphatic and/or aromatic, straight-chain or branched hydrocarbyl radical having 8 to 40 carbon atoms,
and also
(Ab) 85 to 99.9% by weight of at least two monoethylenically unsaturated, hydrophilic monomers (Ab) different therefrom, where the monomers (Ab) comprise
(Ab1) at least one uncharged, monoethylenically unsaturated, hydrophilic monomer (b1), selected from the group of (meth)acrylamide, N-methyl(meth)acrylamide, N,N'-dimethyl(meth)acrylamide or N-methylol(meth)acrylamide, and
(Ab2) at least one anionic, monoethylenically unsaturated, hydrophilic monomer (Ab2) which acts at least one acidic group selected from the group of -COOH, -SO₃H and -PO₃H₂ and salts thereof,
where the proportions are each based on the total amount of all monomers in the copolymer and the copolymer has a weight-average molecular weight M_{w} of 1^{∗}10⁶ g/mol to 30^{∗}10⁶ g/mol,
and wherein
(B) the at least one surfactant is a nonionic and/or anionic surfactant which is selected from the group of
(Ba) nonionic surfactants of the general formula R¹⁵-O-(R¹⁶O)ₐ-H (VII) where the radicals are each defined as follows:
R¹⁵: a C₁₀- to C₃₆-hydrocarbyl radical,
R¹⁶O: independently an alkyleneoxy group having 2 to 4 carbon atoms, with the proviso that at least 50 mol% of the R¹⁶O radicals are 1,2-ethyleneoxy groups,
a: a number from 3 to 100,
(Bb) anionic surfactants of the general formula R¹⁵-O-(R¹⁷O)_{b}-R¹⁸-Y (VIII) where the radicals are each defined as follows:
R¹⁵: as already defined,
R¹⁷O: independently alkyleneoxy groups having 2 to 4 carbon atoms, with the proviso that at least 30 mol% of the R¹⁷ radicals are 1,2-ethyleneoxy groups and/or 1,2-propyleneoxy groups,
R¹⁸: a single bond or a divalent hydrocarbyl group having 1 to 10 carbon atoms,
b: a number from 1 to 100, and
Y: an acidic group or a salt thereof, selected from the group of sulfonate groups, sulfate groups, phosphonate groups, phosphoric acid groups or carboxyl groups,
(Bc) star-shaped nonionic surfactants of the general formula R¹⁹[(O-(CH-CH(R²⁰)-O)_{c}-(CH₂CH₂O)_{d}-(CH-CH(R²⁰)-O)ₑ-H]_{f} (IX) where the radicals are each defined as follows:
f: a number from 3 to 9,
R¹⁹: an f-valent hydrocarbyl radical,
R²⁰: an aliphatic hydrocarbyl radical having 1 to 3 carbon atoms,
c: a number from 0 to 2,
d: a number from 2 to 50,
e: a number from 2 to 50,
and where
▪ the amount of the copolymers (A) in the formulation is 0.02 to 2% by weight,
▪ the amount of the surfactants (B) is 0.005 to 1.0% by weight, and
▪ the viscosity of the formulation is at least 5 mPas (measured at 25°C),
▪ the weight ratio of the copolymers to the surfactants (A)/(B) is 2:1 to 20:1.

2. The process according to claim 1, wherein water is injected into the mineral oil formation in a step preceding the injection of the aqueous formulation described.

3. The process according to claim 1 or 2, wherein the monomer (Aa) is at least one of the formula (I), and where
• R⁴ is a hydrocarbyl radical having 3 to 8 carbon atoms,
• k is a number from 12 to 100, and
• R⁵ is H, methyl or ethyl.

4. The process according to claim 3, wherein
• R⁴ is an n-propyl radical,
• k is a number from 15 to 80, and
• R⁵ is H.

5. The process according to any of claims 1 to 4, wherein the uncharged monomers (b1) are used in an amount of 30 to 95% by weight and the anionic monomers (Ab2) in an amount of 4.9 to 69.9% by weight, where the amounts are each based on the total amount of all monomers used.

6. The process according to any of claims 1 to 4, wherein the copolymer further comprises at least one monoethylenically unsaturated, cationic monomer (b3) comprising ammonium ions.

7. The process according to claim 6, wherein the cationic monomer (b3) comprises salts of 3-trimethylammoniumpropyl(meth)acrylamides and 2-trimethylammoniumethyl (meth)acrylates.

8. The process according to claim 6 or 7, wherein the uncharged monomers (b1) in an amount of 30 to 95% by weight and the anionic monomers (Ab2) and cationic monomers (b3) together in an amount of 4.9 to 69.9% by weight, with the proviso that the molar ratio (Ab2)/(b3) is 0.7 to 1.3, and where the amounts are each based on the total amount of all monomers used.

9. The process according to any of claims 1 to 8, wherein the preparation of the hydrophobically associating copolymer (A) is undertaken in the presence of a nonpolymerizable, surface-active compound.

10. An aqueous formulation for mineral oil production comprising at least one water-soluble, hydrophobically associating copolymer (A) and at least one surfactant (B), wherein the water-soluble, hydrophobically associating copolymer comprises
(Aa) 0.1 to 15% by weight of at least one monoethylenically unsaturated monomer (Aa) selected from the group of
H₂C=C(R¹)-R²-O-(-CH₂-CH(R³)-O-)ₖ-(-CH₂-CH(R⁴)-O-)ₗ-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
where the - (-CH₂-CH(R³)-O-)ₖ and - (-CH₂-CH(R⁴)-O-)ₗ units are arranged in block structure in the sequence shown in formula (I) and the radicals and indices are each defined as follows:
k: a number from 10 to 150,
l: a number from 5 to 25,
R¹: H or methyl,
R²: a single bond or a divalent linking group selected from the group of - (CₙH₂ₙ)- [R^{2a}], -O-(C_{n'}H_{2n'})-[R^{2b}] and -C(O)-O-(C_{n"}H_{2n"})-[R^{2c}], where n, n' and n" are each natural numbers from 1 to 6,
R³: each independently H, methyl or ethyl, with the proviso that at least 50 mol% of the R² radicals are H,
R⁴: each independently a hydrocarbyl radical having at least 2 carbon atoms or an ether group of the general formula -CH₂-O-R^{4'}, where R^{4'} is a hydrocarbyl radical having at least 2 carbon atoms,
R⁵: H or a hydrocarbyl radical having 1 to 30 carbon atoms,
R⁶: an aliphatic and/or aromatic, straight-chain or branched hydrocarbyl radical having 8 to 40 carbon atoms,
and also
(Ab) 85 to 99.9% by weight of at least two monoethylenically unsaturated, hydrophilic monomers (Ab) different than (Aa), where the monomers (Ab) comprise
(Ab1) at least one uncharged, monoethylenically unsaturated, hydrophilic monomer (b1), selected from the group of (meth)acrylamide, N-methyl(meth)acrylamide, N,N'-dimethyl(meth)acrylamide or N-methylol(meth)acrylamide, and
(Ab2) at least one anionic, monoethylenically unsaturated, hydrophilic monomer (Ab2) which acts at least one acidic group selected from the group of -COOH, -SO₃H and -PO₃H₂ and salts thereof,
where the proportions are each based on the total amount of all monomers in the copolymer and the copolymer has a weight-average molecular weight M_{w} of 1^{∗}10⁶ g/mol to 30^{∗}10⁶ g/mol,
and wherein
(B) the at least one surfactant is a nonionic and/or anionic surfactant which is selected from the group of
(Ba) nonionic surfactants of the general formula R¹⁵-O-(R¹⁶O)ₐ-H (VII) where the radicals are each defined as follows:
R¹⁵: a C₁₀- to C₃₆-hydrocarbyl radical,
R¹⁶O: independently an alkyleneoxy group having 2 to 4 carbon atoms, with the proviso that at least 50 mol% of the R¹⁶ radicals are 1,2-ethyleneoxy groups,
a: a number from 3 to 100,
(Bb) anionic surfactants of the general formula R¹⁵-O-(R¹⁷O)_{b}-R¹⁸-Y (VIII) where the radicals are each defined as follows:
R¹⁵: as already defined,
R¹⁷O: independently alkyleneoxy groups having 2 to 4 carbon atoms, with the proviso that at least 30 mol% of the R¹⁷ radicals are 1,2-ethyleneoxy groups and/or 1,2-propyleneoxy groups,
R¹⁸: a single bond or a divalent hydrocarbyl group having 1 to 10 carbon atoms,
b: a number from 1 to 100, and
Y: an acidic group or a salt thereof, selected from the group of sulfonate groups, sulfate groups, phosphonate groups, phosphoric acid groups or carboxyl groups,
(Bc) star-shaped nonionic surfactants of the general formula R¹⁹[(O-(CH-CH(R²⁰)-O)_{c}-(CH₂CH₂O)_{d}-(CH-CH(R²⁰)-O)ₑ-H]_{f} (IX) where the radicals are each defined as follows:
f: a number from 3 to 9,
R¹⁹: an f-valent hydrocarbyl radical,
R²⁰: an aliphatic hydrocarbyl radical having 1 to 3 carbon atoms,
c: a number from 0 to 2,
d: a number from 2 to 50,
e: a number from 2 to 50,
and where
▪ the amount of the copolymers (A) in the formulation is 0.02 to 2% by weight,
▪ the amount of the surfactants (B) is 0.05 to 0.5% by weight, and
▪ the viscosity of the formulation is at least 5 mPas (measured at 25°C),
▪ the weight ratio of the copolymers to the surfactants (A)/(B) is 2:1 to 20:1.

11. The aqueous formulation according to claim 10, wherein the monomer (Aa) is at least one of the formula (I), and where
• R⁴ is a hydrocarbyl radical having 3 to 10 carbon atoms,
• k is a number from 12 to 100, and
• R⁵ is H, methyl or ethyl.

12. The aqueous formulation according to claim 11, wherein
• R⁴ is an n-propyl radical,
• k is a number from 15 to 80, and
• R⁵ is H.

## Revendications

1. Procédé d'extraction de pétrole, selon lequel une formulation aqueuse comprenant au moins un copolymère soluble dans l'eau à association hydrophobe (A), ainsi qu'au moins un tensioactif (B), est injectée par au moins un forage d'injection dans un gisement pétrolier et du pétrole brut est extrait du gisement par au moins un forage de production, **caractérisé en ce que**
(A) le copolymère soluble dans l'eau à association hydrophobe comprend :
(Aa) 0,1 à 15 % en poids d'au moins un monomère monoéthyléniquement insaturé (Aa) choisi dans le groupe constitué par :
H₂C=C(R¹)-R²-O-(-CH₂-CH(R³)-O-)ₖ-(-CH₂-CH(R⁴)-O-)ₗ-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
les unités -(-CH₂-CH(R³)-O-)ₖ et -(-CH₂-CH(R⁴)-O-)ₗ étant agencées selon une structure séquencée dans l'ordre indiqué dans la formule (I), et les radicaux et les indices ayant la signification suivante :
k : un nombre de 10 à 150,
l : un nombre de 5 à 25,
R¹: H ou méthyle,
R² : une simple liaison ou un groupe bivalent de liaison choisi dans le groupe constitué par - (CₙH₂ₙ)-[R^{2a}], -O-(C_{n'}H_{2n'})-[R^{2b}] et -C(O)-O-(C_{n"}H_{2n"})-[R^{2c}], n, n' et n" représentant chacun un nombre naturel de 1 à 6,
les R³ : indépendamment les uns des autres H, méthyle ou éthyle, à condition qu'au moins 50 % en moles des radicaux R² représentent H,
les R⁴ : indépendamment les uns des autres un radical hydrocarboné contenant au moins 2 atomes de carbone ou
un groupe éther de la formule générale -CH₂-O-R^{4'}, R^{4'} représentant un radical hydrocarboné contenant au moins 2 atomes de carbone,
R⁵ : H ou un radical hydrocarboné contenant 1 à 30 atomes C,
R⁶ : un radical hydrocarboné aliphatique et/ou aromatique, linéaire ou ramifié, contenant 8 à 40 atomes de carbone,
ainsi qu'également
(Ab) 85 à 99,9 % en poids d'au moins deux monomères hydrophiles monoéthyléniquement insaturés (Ab) différents de ceux-ci, les monomères (Ab) consistant en :
(Ab1) au moins un monomère hydrophile neutre monoéthyléniquement insaturé (b1), choisi dans le groupe constitué par le (méth)acrylamide, le N-méthyl(méth)acrylamide, le N,N'-diméthyl(méth)acrylamide ou le N-méthylol(méth)acrylamide, ainsi qu'en
(Ab2) au moins un monomère hydrophile anionique monoéthyléniquement insaturé (Ab2), qui agit au moins un groupe acide choisi dans le groupe constitué par - COOH, -SO₃H ou -PO₃H₂ ou leurs sels,
les données de quantités se rapportant à chaque fois à la quantité totale de tous les monomères dans le copolymère et le copolymère présentant un poids moléculaire moyen en poids M_{w} de 1^{∗}10⁶ g/mol à 30^{∗}10⁶ g/mol,
et **en ce que**
(B) ledit au moins un tensioactif consiste en un tensioactif non ionique et/ou anionique, qui est choisi dans le groupe constitué par :
(Ba) les tensioactifs non ioniques de la formule générale R¹⁵-O-(R¹⁶O)ₐ-H (VII), dans laquelle les radicaux ont la signification suivante :
R¹⁵ : un radical hydrocarboné en C₁₀ à C₃₆,
les R¹⁶O : indépendamment les uns des autres un groupe alkylène-oxy contenant 2 à 4 atomes de carbone, à condition qu'au moins 50 % en moles des radicaux R¹⁶O représentent un groupe 1,2-éthylène-oxy,
a : un nombre de 3 à 100,
(Bb) les tensioactifs anioniques de la formule générale R¹⁵-O-(R¹⁷O)_{b}-R¹⁸-Y (VIII), dans laquelle les radicaux ont la signification suivante :
R¹⁵ : tel que défini précédemment,
les R¹⁷O : indépendamment les uns des autres des groupes alkylène-oxy contenant 2 à 4 atomes de carbone, à condition qu'au moins 30 % en moles des radicaux R¹⁷ représentent un groupe 1,2-éthylène-oxy et/ou 1,2-propylène-oxy,
R¹⁸ : une simple liaison ou un groupe hydrocarboné bivalent de 1 à 10 atomes de carbone,
b : un nombre de 1 à 100, et
Y : un groupe acide ou un sel de celui-ci, choisi dans le groupe constitué par les groupes sulfonate, les groupes sulfate, les groupes phosphonate, les groupes acide phosphorique ou les groupes carboxyle,
(Bc) les tensioactifs non ioniques en étoile de la formule générale R¹⁹[(O-(CH-CH(R²⁰)-O)_{c}-(CH₂CH₂O)_{d}-(CH-CH(R²⁰)-O)ₑ-H]_{f} (IX), dans laquelle les radicaux ont la signification suivante :
f : un nombre de 3 à 9,
R¹⁹ : un radical hydrocarboné f-valent,
R²⁰ : un radical hydrocarboné aliphatique de 1 à 3 atomes de carbone,
c : un nombre de 0 à 2,
d : un nombre de 2 à 50,
e : un nombre de 2 à 50,
et dans lequel
- la quantité des copolymères (A) dans la formulation est de 0,02 à 2 % en poids,
- la quantité des tensioactifs (B) est de 0,005 à 1,0 % en poids, et
- la viscosité de la formulation est d'au moins 5 mPas (mesurée à 25 °C),
- le rapport en poids entre les copolymères et les tensioactifs (A)/(B) est de 2:1 à 20:1.

2. Procédé selon la revendication 1, **caractérisé en ce que** de l'eau est injectée dans la formation pétrolière lors d'une étape précédant l'injection de la formulation aqueuse décrite.

3. Procédé selon la revendication 1 ou 2, **caractérisé en ce que** le monomère (Aa) consiste en au moins un de la formule (I), et dans lequel
- R⁴ représente un radical hydrocarboné de 3 à 8 atomes de carbone,
- k représente un nombre de 12 à 100, et
- R⁵ représente H, méthyle ou éthyle.

4. Procédé selon la revendication 3, **caractérisé en ce que**
- R⁴ consiste en un radical n-propyle,
- k représente un nombre de 15 à 80, et
- R⁵ représente H.

5. Procédé selon l'une quelconque des revendications 1 à 4, **caractérisé en ce que** les monomères neutres (b1) sont utilisés en une quantité de 30 à 95 % en poids, et les monomères anioniques (Ab2) sont utilisés en une quantité de 4,9 à 69,9 % en poids, les quantités se rapportant à chaque fois à la quantité totale de tous les monomères utilisés.

6. Procédé selon l'une quelconque des revendications 1 à 4, **caractérisé en ce que** le copolymère comprend en outre au moins un monomère (b3) monoéthyléniquement insaturé, cationique, comprenant des ions ammonium.

7. Procédé selon la revendication 6, **caractérisé en ce que** le monomère cationique (b3) consiste en des sels de (méth)acrylamides de 3-triméthylammonium-propyle et de (méth)acrylates de 2-triméthylammonium-éthyle.

8. Procédé selon la revendication 6 ou 7, **caractérisé en ce que** les monomères neutres (b1) en une quantité de 30 à 95 % en poids et les monomères anioniques (Ab2) et cationiques (b3) sont utilisés ensemble en une quantité de 4,9 à 69,9 % en poids, à condition que le rapport molaire (Ab2)/(b3) soit de 0,7 à 1,3, et dans lequel les quantités se rapportent à chaque fois à la quantité totale de tous les monomères utilisés.

9. Procédé selon l'une quelconque des revendications 1 à 8, **caractérisé en ce que** la fabrication du copolymère à association hydrophobe (A) est réalisée en présence d'un composé tensioactif non polymérisable.

10. Formulation aqueuse pour l'extraction de pétrole comprenant au moins un copolymère soluble dans l'eau à association hydrophobe (A), ainsi qu'au moins un tensioactif (B), **caractérisée en ce que** le copolymère soluble dans l'eau à association hydrophobe comprend :
(Aa) 0,1 à 15 % en poids d'au moins un monomère monoéthyléniquement insaturé (Aa) choisi dans le groupe constitué par :
H₂C=C(R¹)-R²-O-(-CH₂-CH(R³)-O-)ₖ-(-CH₂-CH(R⁴)-O-)₁-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
les unités -(-CH₂-CH(R³)-O-)ₖ et -(-CH₂-CH(R⁴)-O-)ₗ étant agencées selon une structure séquencée dans l'ordre indiqué dans la formule (I) et les radicaux et les indices ayant la signification suivante :
k : un nombre de 10 à 150,
l : un nombre de 5 à 25,
R¹: H ou méthyle,
R² : une simple liaison ou un groupe bivalent de liaison choisi dans le groupe constitué par -(CₙH₂ₙ)-[R^{2a}], -O-(C_{n'}H_{2n'})-[R^{2b}] et -C(O)-O-(C_{n''},H_{2n''})-[R^{2c}], n, n' et n'' représentant chacun un nombre naturel de 1 à 6, les R³ : indépendamment les uns des autres H, méthyle ou éthyle, à condition qu'au moins 50 % en moles des radicaux R² représentent H,
les R⁴ : indépendamment les uns des autres un radical hydrocarboné contenant au moins 2 atomes de carbone ou un groupe éther de la formule générale -CH₂-O-R^{4'}, R^{4'} représentant un radical hydrocarboné contenant au moins 2 atomes de carbone,
R⁵ : H ou un radical hydrocarboné contenant 1 à 30 atomes C,
R⁶ : un radical hydrocarboné aliphatique et/ou aromatique, linéaire ou ramifié, contenant 8 à 40 atomes de carbone,
ainsi qu'également
(Ab) 85 à 99,9 % en poids d'au moins deux monomères hydrophiles monoéthyléniquement insaturés (Ab), différents de (Aa), les monomères (Ab) consistant en :
(Ab1) au moins un monomère hydrophile neutre monoéthyléniquement insaturé (b1), choisi dans le groupe constitué par le (méth)acrylamide, le N-méthyl(méth)acrylamide, le N,N'-diméthyl(méth)acrylamide ou le N-méthylol(méth)acrylamide, ainsi qu'en
(Ab2) au moins un monomère hydrophile anionique monoéthyléniquement insaturé (Ab2), qui agit au moins un groupe acide choisi dans le groupe constitué par - COOH, -SO₃H ou -PO₃H₂ ou leurs sels,
les données de quantités se rapportant à chaque fois à la quantité totale de tous les monomères dans le copolymère et le copolymère présentant un poids moléculaire moyen en poids M_{w} de 1^{∗}10⁶ g/mol à 30^{∗}10⁶ g/mol,
et **en ce que**
(B) ledit au moins un tensioactif consiste en un tensioactif non ionique et/ou anionique, qui est choisi dans le groupe constitué par :
(Ba) les tensioactifs non ioniques de la formule générale R¹⁵-O-(R¹⁶O)ₐ-H (VII), dans laquelle les radicaux ont la signification suivante :
R¹⁵ : un radical hydrocarboné en C₁₀ à C₃₆,
les R¹⁶O : indépendamment les uns des autres un groupe alkylène-oxy contenant 2 à 4 atomes de carbone, à condition qu'au moins 50 % en moles des radicaux R¹⁶ représentent un groupe 1,2-éthylène-oxy,
a : un nombre de 3 à 100,
(Bb) les tensioactifs anioniques de la formule générale R¹⁵-O- (R¹⁷O)_{b}-R¹⁸-Y (VIII), dans laquelle les radicaux ont la signification suivante :
R¹⁵ : tel que défini précédemment,
les R¹⁷O : indépendamment les uns des autres un groupe alkylène-oxy contenant 2 à 4 atomes de carbone, à condition qu'au moins 30 % en moles des radicaux R¹⁷ représentent un groupe 1,2-éthylène-oxy et/ou 1,2-propylène-oxy,
R¹⁸ : une simple liaison ou un groupe hydrocarboné bivalent de 1 à 10 atomes de carbone,
b : un nombre de 1 à 100, et
Y : un groupe acide ou un sel de celui-ci, choisi dans le groupe constitué par les groupes sulfonate, les groupes sulfate, les groupes phosphonate, les groupes acide phosphorique ou les groupes carboxyle,
(Bc) les tensioactifs non ioniques en étoile de la formule générale R¹⁹[(O-(CH-CH(R²⁰)-O)_{c}-(CH₂CH₂O)_{d}-(CH-CH(R²⁰)-O)ₑ-H]_{f} (IX), dans laquelle les radicaux ont la signification suivante :
f : un nombre de 3 à 9,
R¹⁹ : un radical hydrocarboné f-valent,
R²⁰ : un radical hydrocarboné aliphatique de 1 à 3 atomes de carbone,
c : un nombre de 0 à 2,
d : un nombre de 2 à 50,
e : un nombre de 2 à 50, et dans laquelle
- la quantité des copolymères (A) dans la formulation est de 0,02 à 2 % en poids,
- la quantité des tensioactifs (B) est de 0,05 à 0,5 % en poids, et
- la viscosité de la formulation est d'au moins 5 mPas (mesurée à 25 °C),
- le rapport en poids entre les copolymères et les tensioactifs (A)/(B) est de 2:1 à 20:1.

11. Formulation aqueuse selon la revendication 10, **caractérisée en ce que** le monomère (Aa) consiste en au moins un de la formule (I), et dans laquelle
- R⁴ représente un radical hydrocarboné de 3 à 10 atomes de carbone,
- k représente un nombre de 12 à 100, et
- R⁵ représente H, méthyle ou éthyle.

12. Formulation aqueuse selon la revendication 11, **caractérisée en ce que**
- R⁴ consiste en un radical n-propyle,
- k représente un nombre de 15 à 80, et
- R⁵ représente H.
